# EUROPEAN PATENT SPECIFICATION

(11) **EP 4 467 930 B1**
(45) Date of publication and mention of the grant of the patent: **28.10.2026**
(21) Application number: 23856327.4
(22) Date of filing: 06.07.2023
(51) Int. Cl.: G01D 21/00, G01N 29/12, G01N 29/22, H01M 10/42, H01M 10/48

(54) **RESONANT SENSOR, BATTERY, BATTERY PACK AND ENERGY STORAGE SYSTEM**
RESONANZSENSOR, BATTERIE, BATTERIEPACK UND ENERGIESPEICHERSYSTEM
CAPTEUR RÉSONANT, BATTERIE, BLOC-BATTERIE ET SYSTÈME DE STOCKAGE D'ÉNERGIE

(30) Priority: 26.08.2022 CN 202211031897
(43) Date of publication of application: 27.11.2024
(73) Proprietor: Huawei Digital Power Technologies Co., Ltd., Shenzhen, Guangdong 518043 (CN)
(72) Inventor: CHEN, Xiaoyang, Chengdu, Sichuan 610065 (CN); WU, Kefan, Chengdu, Sichuan 610065 (CN); CAO, Huajun, Shenzhen, Guangdong 518043 (CN); ZHONG, Zheng, Shenzhen, Guangdong 518043 (CN); HOU, Tianhong, Shenzhen, Guangdong 518043 (CN); AI, Chao, Shenzhen, Guangdong 518043 (CN); YU, Ping, Chengdu, Sichuan 610065 (CN)
(74) Representative: Isarpatent
(86) International application number: PCT/CN2023/106128
(87) International publication number: WO 2024/041237

(56) References cited:
- EP-B1- 3 097 600
- EP-B1- 3 104 172
- WO-A1-2022/025227
- CN-A- 110 149 100
- CN-A- 110 149 100
- CN-A- 113 295 303
- CN-A- 114 257 195
- CN-A- 115 493 624
- DE-A1- 102018 216 605
- US-A1- 2013 125 629
- US-A1- 2013 125 629

## Description

### TECHNICAL FIELD

This application relates to the field of microelectronic components, and in particular, to a resonant sensor, a battery, a battery pack, and an energy storage system.

### BACKGROUND

At present, a resonant sensor includes a sensor housing, a sensitive element, and a substrate for protecting the sensitive element, and is made by using a rigid packaging technology. The sensitive element and the substrate for protecting the sensitive element are disposed in the sensor housing, and both the sensor housing and the substrate for protecting the sensitive element are made of rigid materials. Due to poor extensibility of the rigid material, the resonant sensor cannot withstand large deformation. Therefore, when the resonant sensor is in an environment (for example, a flexible electronic system or a flexible circuit) with a flexible feature requirement, detection performance of the resonant sensor is excessively low or even the resonant sensor cannot operate normally.

US 2013/0125629 A1 discloses a resonator circuit board comprising a base support unit consisting of a bottom film, a support film and a spacer film. A final film is provided, which fixes an oscillating quartz crystal in its position within the base support unit. In addition, the support film includes conductor paths. These conductor paths end in resonator contacts at the edge of the oscillating quartz crystal. The oscillating quartz crystal which refers to a resonator likewise exhibits contacts for its electrodes at its bottom side and rests on the resonator contacts via those contacts. In order to fix the resonator in place, it has its upper side, which also includes the sensitive element of the resonator, glued to a final film which merely rests on the edge region of the resonator. CN 110 149 100 A relates to flexible electronic devices in the field of semiconductor technology. EP 3 104 172 B1 discloses a sensor apparatus capable of measuring nature of a specimen or ingredients contained in the specimen.

### SUMMARY

This application provides, as defined in the appended set of claims, a resonant sensor, a battery, a battery pack, and an energy storage system, so that the resonant sensor can operate in an environment with a flexible feature requirement, detection performance of the resonant sensor is improved, and applicability is high.

According to a first aspect, this application provides a resonant sensor. The resonant sensor includes a sensor body and a first substrate, and the first substrate is disposed on an outer side of the sensor body and is configured to protect the sensor body. The sensor body includes a second substrate, a third substrate, a support component, and one or more sensitive elements. The first substrate, the second substrate, and the third substrate are all flexible substrates. Therefore, the resonant sensor may operate in an environment with a flexible feature requirement, thereby expanding an application field and an application scenario of the resonant sensor. In the sensor body, the second substrate and the third substrate are stacked, the third substrate includes a first conductor part and a second conductor part, both the first conductor part and the second conductor part are located on a side that is of the third substrate and that is away from the second substrate, and a first hollow part is disposed between the first conductor part and the second conductor part, where the first hollow part is configured to isolate the first conductor part from the second conductor part, to avoid a short circuit of the resonant sensor. The one or more sensitive elements are disposed on an outer side that is of the first conductor part and the second conductor part and that is away from the second substrate, and each sensitive element is electrically connected to the first conductor part and the second conductor part. In this case, the third substrate may serve as an electrical connection carrier of the one or more sensitive elements and physically protect the one or more sensitive elements, thereby improving stability and reliability of the sensitive element. The support component is disposed on an outer side that is of the third substrate and that is away from the second substrate and is configured to support the first substrate, so that the first substrate is isolated from the one or more sensitive elements, and the first substrate may further physically protect the one or more sensitive elements, thereby improving stability and reliability of the sensitive element and further improving detection performance of the resonant sensor.

With reference to the first aspect, in a first possible implementation, the flexible substrate includes a high-molecular polymer.

With reference to the first aspect or the first possible implementation of the first aspect, in a second possible implementation, the support component includes M support sub-parts. Each sensitive element in the one or more sensitive elements corresponds to at least two support sub-parts, one end that is of each sensitive element and that is electrically connected to the first conductor part has at least one support sub-part, and the other end that is of the sensitive element and that is electrically connected to the second conductor part also has at least one support sub-part. The M support sub-parts are configured to support the first substrate, so that the first substrate is isolated from the one or more sensitive elements, thereby improving stability and reliability of the sensitive element, and further improving detection performance of the resonant sensor.

With reference to the second possible implementation of the first aspect, in a third possible implementation, the at least two support sub-parts corresponding to each sensitive element are configured to be bonded to the corresponding sensitive element. The at least two support sub-parts are configured to support the first substrate, so that the first substrate is isolated from the corresponding sensitive element, thereby improving stability and reliability of the sensitive element, and further improving detection performance of the resonant sensor.

With reference to the third possible implementation of the first aspect, in a fourth possible implementation, the at least two support sub-parts corresponding to each sensitive element are configured to be bonded to an outer surface that is of the corresponding sensitive element and that is away from the third substrate. The at least two support sub-parts are configured to support the first substrate, so that the first substrate is isolated from the corresponding sensitive element, thereby improving stability and reliability of the sensitive element, and further improving detection performance of the resonant sensor.

With reference to the third possible implementation of the first aspect or the fourth possible implementation of the first aspect, in a fifth possible implementation, the at least two support sub-parts corresponding to each sensitive element are configured to be bonded to end parts of the outer surface that is of the corresponding sensitive element and that is away from the third substrate. The at least two support sub-parts are configured to support the first substrate, so that the first substrate is isolated from the corresponding sensitive element, thereby improving stability and reliability of the sensitive element, and further improving detection performance of the resonant sensor.

With reference to any one of the third possible implementation of the first aspect to the fifth possible implementation of the first aspect, in a possible implementation, a thickness of each support sub-part in the at least two support sub-parts may be greater than or equal to 25 µm and less than or equal to 100 µm. A length and a width of each support sub-part each may be greater than or equal to 1 mm and less than or equal to 3 mm.

With reference to the second possible implementation of the first aspect, in a sixth possible implementation, a thickness of the at least two support sub-parts corresponding to each sensitive element is greater than a thickness of the corresponding sensitive element, and the at least two support sub-parts are disposed outside the corresponding sensitive element and are bonded to the third substrate. The at least two support sub-parts are configured to support the first substrate, so that the first substrate is isolated from the corresponding sensitive element, thereby improving stability and reliability of the sensitive element, and further improving detection performance of the resonant sensor.

With reference to the sixth possible implementation of the first aspect, in a seventh possible implementation, the at least two support sub-parts corresponding to each sensitive element are disposed outside the corresponding sensitive element, and are spaced with the corresponding sensitive element. The at least two support sub-parts are configured to support the first substrate, so that the first substrate is isolated from the corresponding sensitive element, thereby improving stability and reliability of the sensitive element, and further improving detection performance of the resonant sensor.

With reference to the seventh possible implementation of the first aspect, in a possible implementation, a distance between each support sub-part in the at least two support sub-parts and the corresponding sensitive element is greater than or equal to 2 mm and less than or equal to 2.5 mm. A thickness of each support sub-part in the at least two support sub-parts is 1.5 times to 2 times that of the corresponding sensitive element. An area of each support sub-part is greater than or equal to 1 mm x 2 mm and less than or equal to 1.5 mm x 2.5 mm.

With reference to the sixth possible implementation of the first aspect, in an eighth possible implementation, the at least two support sub-parts corresponding to each sensitive element are all wedge-shaped support parts, the at least two support sub-parts are disposed outside the corresponding sensitive element, and wedge-shaped surfaces of the at least two support sub-parts are clamped to end parts of the corresponding sensitive element. The at least two support sub-parts are configured to support the first substrate, so that the first substrate is isolated from the corresponding sensitive element, thereby improving stability and reliability of the sensitive element, and further improving detection performance of the resonant sensor. In addition, the wedge-shaped surface is used to reduce force exerted on the corresponding sensitive element, thereby further improving detection performance of the resonant sensor.

With reference to any one of the second possible implementation of the first aspect to the eighth possible implementation of the first aspect, in a ninth possible implementation, each sensitive element in at least one sensitive element in the one or more sensitive elements corresponds to two support sub-parts, and the two support sub-parts are symmetrically disposed, thereby improving stability of an entire structure of the sensor.

With reference to the first aspect or the second possible implementation of the first aspect, in a tenth possible implementation, the support component includes at least one second hollow part, each second hollow part in the at least one second hollow part penetrates the support component along a thickness direction of the support component, a thickness of the support component is greater than a thickness of each sensitive element in the one or more sensitive elements, and the support component is configured to be bonded to the third substrate. Each sensitive element is correspondingly disposed in an area enclosed by an end part of one second hollow part. The support component is configured to support the first substrate, so that the first substrate is isolated from the one or more sensitive elements, thereby improving stability and reliability of the sensitive element, and further improving detection performance of the resonant sensor.

With reference to the tenth possible implementation of the first aspect, in a possible implementation, the thickness of the support component is 1.5 times to 2 times that of each sensitive element in the one or more sensitive elements. An area of the second hollow part corresponding to each sensitive element is 1.2 times that of the corresponding sensitive element.

With reference to any one of the first aspect to the tenth possible implementation of the first aspect, in an eleventh possible implementation, the first substrate includes according to the invention a protection part and two connection parts, two end parts of the protection part are securely in contact with the second substrate to form protection space, the third substrate, the one or more sensitive elements, and the support component are disposed in the protection space, and each connection part in the two connection parts is configured to be fastened to an end part of the protection part and an end part of the second substrate. The protection space is used to physically protect the third substrate, the one or more sensitive elements, and the support component, and the protection part and the two connection parts are jointly used to physically protect the second substrate, thereby improving reliability of the resonant sensor and prolonging a service life of the resonant sensor.

With reference to the eleventh possible implementation of the first aspect, in a twelfth possible implementation, the resonant sensor includes a first cavity, and the first cavity is formed by enclosing a side that is of the one or more sensitive elements and that faces the protection part, the support component, and the protection part. It may be understood that the first cavity is located above the one or more sensitive elements and is configured to reduce force exerted on the one or more sensitive elements, thereby further improving detection performance of the resonant sensor.

With reference to any one of the first aspect to the twelfth possible implementation of the first aspect, in a thirteenth possible implementation, the resonant sensor includes a second cavity, and the second cavity is formed by enclosing the first conductor part, the second conductor part, the one or more sensitive elements, and an area that corresponds to the first hollow part and that is on the second substrate. It may be understood that the second cavity is located below the one or more sensitive elements and is configured to reduce force exerted on the one or more sensitive elements, thereby further improving detection performance of the resonant sensor.

With reference to any one of the first aspect to the thirteenth possible implementation of the first aspect, in a fourteenth possible implementation, each sensitive element in the one or more sensitive elements includes a crystal oscillator, a first electrode, and a second electrode, and the first electrode and the second electrode are disposed opposite to each other on two sides of the crystal oscillator. The first electrode of each sensitive element is electrically connected to the first conductor part, and the second electrode of each sensitive element is electrically connected to the second conductor part, so that reliability and stability of each sensitive element can be improved.

With reference to any one of the first aspect to the fourteenth possible implementation of the first aspect, in a fifteenth possible implementation, when the resonant sensor includes a plurality of sensitive elements, the plurality sensitive elements are arranged on the outer side that is of the first conductor part and the second conductor part and that is away from the second substrate to form one or more sensitive element arrays. The one or more sensitive element arrays are configured to implement arrayed detection of the resonant sensor. This is more applicable.

With reference to the fifteenth possible implementation of the first aspect, in a possible implementation, for each sensitive element array in the one or more sensitive element arrays, a row spacing and a column spacing of sensitive elements in each sensitive element array are greater than or equal to 5.5 mm and less than or equal to 30.5 mm, and a distance between an edge position of each sensitive element array and an edge position of the third substrate is greater than or equal to 2.5 mm and less than or equal to 7.5 mm. It may be understood that, at least one sensitive element array made based on the foregoing size parameters meets a technical requirement for preparing a small-surface element and high-density large-scale array component, and can obtain a high quantity of parameter sensing to implement array detection of the resonant sensor. This is more applicable.

With reference to any one of the first aspect to the fifteenth possible implementation of the first aspect, in a possible implementation, a thickness of each substrate in the first substrate, the second substrate, and the third substrate is greater than or equal to 25 µm and less than or equal to 100 µm. A length and a width of each substrate each are greater than or equal to 25 mm and less than or equal to 160 mm. A thickness of each of the first conductor part and the second conductor part is greater than or equal to 5 µm and less than or equal to 35 µm.

With reference to any one of the first aspect to the fifteenth possible implementation of the first aspect, in a possible implementation, a thickness of each sensitive element in the one or more sensitive elements is greater than or equal to 100 µm and less than or equal to 600 µm. In an embodiment, when a shape of the at least one sensitive element in the one or more sensitive elements is a rectangle, an area of each sensitive element in the at least one sensitive element is greater than or equal to 2.8 mm x 4 mm and less than or equal to 5.5 mm x 3.5 mm. When the shape of the at least one sensitive element is a circle, a diameter of each sensitive element in the at least one sensitive element is greater than or equal to 3 mm and less than or equal to 6 mm.

According to a second aspect, this application provides a battery. The battery includes a positive electrode, a negative electrode, and the resonant sensor provided in any one of the first aspect to the fifteenth possible implementation of the first aspect. The positive electrode is electrically connected to a first conductor part in the resonant sensor, and the negative electrode is electrically connected to a second conductor part in the resonant sensor. Because the resonant sensor is more flexible, the resonant sensor may be better compatible with a corrosive electrochemical environment inside the battery, so that use performance and precision of the resonant sensor are not affected. In addition, the resonant sensor is smaller in size, impact on a capacity of the battery is little, and industrial production of the battery is easy to be implemented.

According to a third aspect, this application provides a battery pack. The battery pack includes a plurality of batteries, and the plurality of batteries are connected in series or in parallel. Each of the plurality of batteries includes the resonant sensor provided in any one of the first aspect to the fifteenth possible implementation of the first aspect. A resonant sensor in each battery may be configured to collect an internal battery parameter of each battery to determine whether each battery is thermal runaway, thereby improving safety and reliability of the battery pack, and prolonging a service life of the battery pack.

According to a fourth aspect, this application provides an energy storage system. The energy storage system includes a battery pack and a direct current-direct current converter. The battery pack includes a plurality of batteries, and each of the plurality of batteries includes the resonant sensor provided in any one of the first aspect to the fifteenth possible implementation of the first aspect. In a process of supplying power by the energy storage system, a resonant sensor in each battery may collect an internal battery parameter of each battery to determine whether each battery is thermal runaway, thereby improving power supply safety and power supply reliability of the energy storage system.

According to a fifth aspect, as described but not claimed, this application provides a method for preparing a resonant sensor. The method is performed by a device (which may be referred to as a sensor manufacturing device for short) having a resonant sensor manufacturing function. In the method, the sensor manufacturing device may make a first substrate, a second substrate, and a third substrate from a high-molecular polymer, and make one or more sensitive elements and a support component. The first substrate, the second substrate, and the third substrate are all flexible substrates. The sensor manufacturing device may make a sensor body from the second substrate, the third substrate, the one or more sensitive elements, and the support component. The second substrate and the third substrate are stacked, the third substrate includes a first conductor part and a second conductor part, both the first conductor part and the second conductor part are located on a side that is of the third substrate and that is away from the second substrate, and a first hollow part is disposed between the first conductor part and the second conductor part, where the first hollow part is configured to isolate the first conductor part from the second conductor part; the one or more sensitive elements are disposed on an outer side that is of the third substrate and that is away from the second substrate, and each sensitive element is electrically connected to the first conductor part and the second conductor part; and the support component is disposed on an outer side that is of the third substrate and that is away from the second substrate and is configured to support the first substrate, so that the first substrate is isolated from the one or more sensitive elements. Further, the sensor manufacturing device may make a resonant sensor from the sensor body and the first substrate. The first substrate is disposed on an outer side of the sensor body and is configured to protect the sensor body. In this application, a resonant sensor with flexible packaging can be made to operate in an environment with a flexible feature requirement, thereby expanding an application field and an application scenario of the resonant sensor, improving detection performance of the resonant sensor, and having high applicability.

In this application, the resonant sensor may operate in the environment with the flexible feature requirement, thereby expanding an application field and an application scenario of the resonant sensor, and having high applicability. In addition, the support component may prevent the first substrate from directly being in contact with the one or more sensitive elements, and the first substrate may further physically protect the one or more sensitive elements, thereby improving stability and reliability of the sensitive element, and further improving detection performance of the resonant sensor.

### BRIEF DESCRIPTION OF DRAWINGS

FIG. 1 is a block diagram of a structure of a resonant sensor according to this application;
FIG. 2A is a graphic diagram of a first conductor part according to this application;
FIG. 2B is a graphic diagram of a second conductor part according to this application;
FIG. 2C is a diagram of a structure of a third substrate according to this application;
FIG. 3A is another graphic diagram of a first conductor part according to this application;
FIG. 3B is a graphic diagram of a second conductor part according to this application;
FIG. 3C is a diagram of another structure of a third substrate according to this application;
FIG. 4A is a top view of a rectangular sensitive element according to this application;
FIG. 4B is a main view of a rectangular sensitive element according to this application;
FIG. 5A is a top view of a circular sensitive element according to this application;
FIG. 5B is a main view of a circular sensitive element according to this application;
FIG. 6 is a diagram of a structure of a resonant sensor according to this application;
FIG. 7 is a diagram of a structure of a sensor body according to this application;
FIG. 8 is a diagram of another structure of a sensor body according to this application;
FIG. 9 is a diagram of another structure of a sensor body according to this application;
FIG. 10A is a diagram of another structure of a sensor body according to this application;
FIG. 10B is a top view of a sensor body according to this application;
FIG. 11 is a diagram of another structure of a resonant sensor according to this application;
FIG. 12 is a main view of a resonant sensor according to this application;
FIG. 13 is a diagram of another structure of a sensor body according to this application;
FIG. 14 is a main view of a sensor body according to this application;
FIG. 15 is a block diagram of a structure of a battery according to this application;
FIG. 16 is a block diagram of a structure of a battery pack according to this application;
FIG. 17 is a block diagram of a structure of an energy storage system according to this application;
FIG. 18 is a schematic flowchart of a method for preparing a resonant sensor according to this application;
FIG. 19 is a diagram of a structure of a sensor body from which a second substrate is removed according to this application;
FIG. 20 is a diagram of force analysis of a support sub-part according to this application;
FIG. 21A is a diagram of a structure of a sensor base according to this application;
FIG. 21B is a diagram of a structure of a sensor base having one or more sensitive elements according to this application;
FIG. 21C is a diagram of a structure of a resonant sensor according to this application;
FIG. 22A is a diagram of another structure of a sensor base according to this application;
FIG. 22B is a diagram of another structure of a sensor base having one or more sensitive elements according to this application; and
FIG. 22C is a diagram of another structure of a resonant sensor according to this application.

### DESCRIPTION OF EMBODIMENTS

A resonant sensor provided in this application is applicable to an environment monitoring field, a traffic management field, a medical and health field, an agricultural and animal husbandry field, a fire safety field, a production and manufacturing field, an aerospace field, an electronic product field, another field, and the like.

The following describes a resonant sensor, a battery, a battery pack, and an energy storage system provided in this application with reference to the figures.

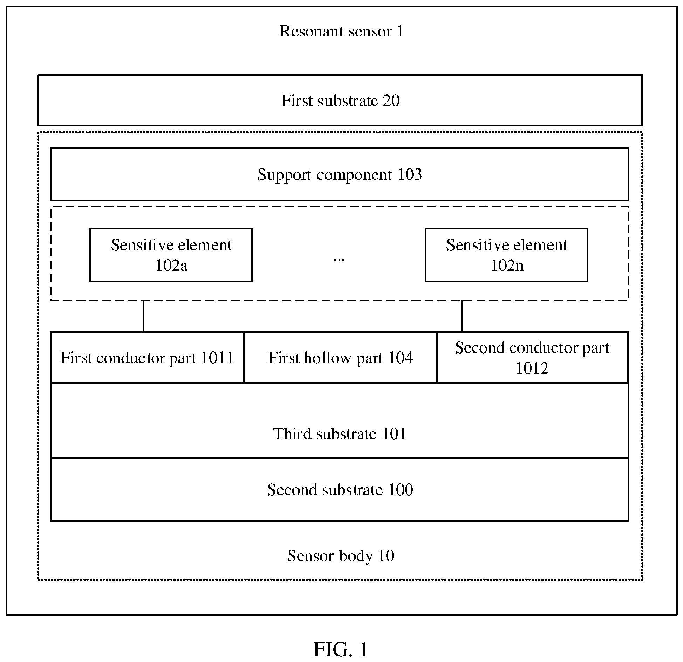

FIG. 1 is a block diagram of a structure of a resonant sensor according to this application. As shown in FIG. 1, a resonant sensor 1 includes a sensor body 10 and a first substrate 20. The first substrate 20 is disposed on an outer side of the sensor body 10 and is configured to protect the sensor body 10. The outer side of the sensor body 10 is a side that is outside the sensor body 10 and that is in contact with the sensor body 10. It may be understood that the first substrate 20 may physically protect the sensor body 10, thereby improving stability and reliability of the resonant sensor 1, and prolonging a service life of the resonant sensor 1.

The sensor body 10 includes a second substrate 100, a third substrate 101, a sensitive element 102a to a sensitive element 102n, and a support component 103. The first substrate 20, the second substrate 100, and the third substrate 101 are all flexible substrates. Therefore, the resonant sensor 1 may operate in an environment with a flexible feature requirement, thereby extending an application field and an application scenario of the resonant sensor 1; and has strong applicability. The flexible substrate includes a high-molecular polymer, and the high-molecular polymer includes but is not limited to at least one of polyimide (polyimide, PI for short), polyvinylidene (polyvinylidene fluoride, PVDF for short), polyethylene (polyethylene, PE for short), and polypropylene (polypropylene, PP for short).

In the sensor body 10, the second substrate 100 and the third substrate 101 are stacked, the third substrate 101 includes a first conductor part 1011 and a second conductor part 1012, and both the first conductor part 1011 and the second conductor part 1012 are located on one side of the third substrate 101, and are specifically located on a side that is of the third substrate 101 and that is away from the second substrate 100. A first hollow part 104 is disposed between the first conductor part 1011 and the second conductor part 1012, and the first hollow part 104 is configured to isolate the first conductor part 1011 from the second conductor part 1012, so that the first conductor part 1011 and the second conductor part 1012 are not in contact with each other, thereby avoiding a short circuit of the resonant sensor 1. In an embodiment, both the first conductor part 1011 and the second conductor part 1012 are located on the side that is of the third substrate 101 and that faces away from the second substrate 100.

The sensitive element 102a to the sensitive element 102n are disposed on an outer side of the first conductor part 1011 and the second conductor part 1012, and are specifically disposed on an outer side that is of the first conductor part 1011 and the second conductor part 1012 and that is away from the second substrate 100, and each sensitive element is electrically connected to the first conductor part 1011 and the second conductor part 1012. The outer side of the first conductor part 1011 and the second conductor part 1012 is a side that is outside of the first conductor part 1011 and the second conductor part 1012 and that is electrically connected to the first conductor part 1011 and the second conductor part 1012. It may be understood that, the third substrate 101 may be used as an electrical connection carrier between the sensitive element 102a and the sensitive element 102n and physically protect the sensitive element 102a to the sensitive element 102n, thereby improving stability and reliability of the sensitive element 102a to the sensitive element 102n. In an embodiment, the sensitive element 102a to the sensitive element 102n are specifically disposed on the outer side that is of the first conductor part 1011 and the second conductor part 1012 and that faces away from the second substrate 100.

The support component 103 is disposed on an outer side of the third substrate 101, and is specifically disposed on an outer side that is of the third substrate 101 and that is away from the second substrate 100 and is configured to support the first substrate 20, so that the first substrate 20 is isolated from the sensitive element 102a to the sensitive element 102n, where isolation means no contact. It may be understood that, the support component 103 may prevent the sensitive element 102a to the sensitive element 102n from directly being in contact with the first substrate 20, and the first substrate 20 may physically protect the sensitive element 102a to the sensitive element 102n, thereby improving stability and reliability of the sensitive element 102a to the sensitive element 102n, and further improving detection performance of the resonant sensor 1.

In an embodiment, a thickness of each substrate in the first substrate 20, the second substrate 100, and the third substrate 101 is greater than or equal to 25 µm and less than or equal to 100 µm, and a length and a width of each substrate each are greater than or equal to 25 mm and less than or equal to 160 mm.

In an embodiment, for each substrate in the first substrate 20, the second substrate 100, and the third substrate 101, lengths and widths of the substrates may be the same, or may be different. Shapes of the first substrate 20, the second substrate 100, and the third substrate 101 each include but are not limited to at least one of a square, a rectangle, and an irregular shape, and may be specifically determined based on an actual processing process and an operating requirement of the resonant sensor 1.

In an embodiment, a made material of the first conductor part 1011 and the second conductor part 1012 includes but is not limited to aluminum (Al), gold (Au), platinum (Pt), copper (Cu), platinum titanium (PtTi), AuPtTi, or NiCr. A thickness of each of the first conductor part 1011 and the second conductor part 1012 is greater than or equal to 5 µm and less than or equal to 35 µm.

In an embodiment, the first conductor part 1011 and the second conductor part 1012 may be made by using a flexible printed circuit board process, and the flexible printed circuit board process is a process of making the first conductor part 1011 and the second conductor part 1012 on a surface of the third substrate 101 by using an optical-imaging pattern transfer and etching process method. The surface of the third substrate 101 is a surface that is of the third substrate 101 and that faces away from the second substrate 100.

In an embodiment, a pattern of the first conductor part 1011 and a pattern of the second conductor part 1012 may be determined based on a number and an arrangement manner of the sensitive element 102a to the sensitive element 102n. This is not limited herein.

In an embodiment, when the resonant sensor 1 includes a plurality of sensitive elements (for example, the sensitive element 102a to the sensitive element 102n), the sensitive element 102a to the sensitive element 102n are arranged on the outer side that is of the first conductor part 1011 and the second conductor part 1012 and that is away from the second substrate 100 to form one or more sensitive element arrays. The one or more sensitive element arrays are configured to implement arrayed detection of the resonant sensor 1. This is more applicable.

In an embodiment, a number and an arrangement manner of the sensitive element 102a to the sensitive element 102n are determined based on an array level of one or more sensitive element arrays. An array level of each sensitive element array may be represented as a number of rows of each sensitive element array x a number of columns of each sensitive element array. The number of rows and the number of columns of each sensitive element array are both positive integers. When the sensitive element 102a to the sensitive element 102n form one sensitive element array, and when the array level of the sensitive element array is 3 x 3, the number of the sensitive element 102a to the sensitive element 102n is 9, and the arrangement manner is three rows and three columns. When the array level of the sensitive element array is 4 x 4, the number of the sensitive element 102a to the sensitive element 102n is 16, and the arrangement manner is four rows and four columns.

In an embodiment, for each sensitive element array in the one or more sensitive element arrays, a row spacing and a column spacing of sensitive elements in each sensitive element array are greater than or equal to 5.5 mm and less than or equal to 30.5 mm, and a distance between an edge position of each sensitive element array and an edge position of the third substrate 101 is greater than or equal to 2.5 mm and less than or equal to 7.5 mm. It may be understood that, the one or more sensitive element arrays made based on the foregoing size parameters meet a technical requirement for preparing a small-surface element and high-density large-scale array component, and can obtain a high quantity of parameter sensing to implement array detection of the resonant sensor 1. This is more applicable.

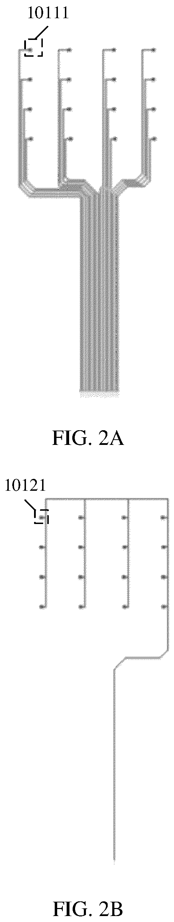

In an embodiment, when the number of the sensitive elements 102a to the sensitive elements 102n is 16, and the arrangement manner is four rows and four columns, for the pattern of the first conductor part 1011, refer to FIG. 2A. FIG. 2A is a diagram of a pattern of a first conductor part according to this application. As shown in FIG. 2A, the first conductor part 1011 includes a plurality of sensitive element electrodes 10111, and the sensitive element electrodes 10111 are square electrodes. A number of the sensitive element electrodes 10111 in the first conductor part 1011 is the same as the number of the sensitive element 102a to the sensitive element 102n, for example, the number of the sensitive element electrodes 10111 may be 16.

In an embodiment, when the number of the sensitive elements 102a to the sensitive elements 102n is 16, and the arrangement manner is four rows and four columns, for the pattern of the second conductor part 1012, refer to FIG. 2B. FIG. 2B is a diagram of a pattern of a second conductor part according to this application. As shown in FIG. 2B, the second conductor part 1012 includes a plurality of sensitive element electrodes 10121, and the sensitive element electrodes 10121 are square electrodes. A number of the sensitive element electrodes 10121 in the second conductor part 1012 is the same as the number of the sensitive element 102a to the sensitive element 102n, for example, the number of the sensitive element electrodes 10121 may be 16.

In an embodiment, each sensitive element in the sensitive element 102a to the sensitive element 102n corresponds to one sensitive element electrode 10111 and one sensitive element electrode 10121, and the one sensitive element electrode 10111 and the one sensitive element electrode 10121 corresponding to each sensitive element are configured to be electrically connected to the corresponding sensitive element.

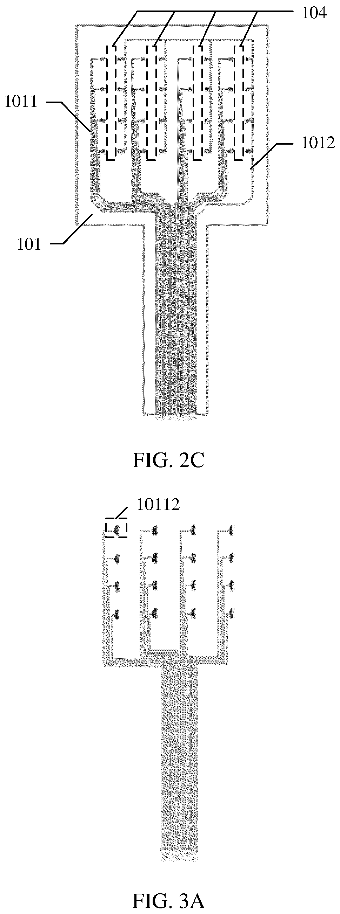

In an embodiment, for arrangement manners of the first conductor part 1011 shown in FIG. 2A and the second conductor part 1012 shown in FIG. 2B on the third substrate 101, refer to FIG. 2C. FIG. 2C is a diagram of a structure of a third substrate according to this application. As shown in FIG. 2C, the first hollow part 104 includes a plurality of hollow sub-parts, an electrode on a left side of each hollow sub-part in the plurality of hollow sub-parts is the sensitive element electrode 10111 in the first conductor part 1011, and an electrode on a right side of each hollow sub-part is the sensitive element electrode 10121 in the second conductor part 1012.

In an embodiment, when the number of the sensitive elements 102a to the sensitive elements 102n is 16, and the arrangement manner is four rows and four columns, for the pattern of the first conductor part 1011, further refer to FIG. 3A. FIG. 3A is a diagram of another pattern of a first conductor part according to this application. As shown in FIG. 3A, the first conductor part 1011 includes a plurality of sensitive element electrodes 10112, and one edge of the sensitive element electrode 10112 is in an arc shape. A number of the sensitive element electrodes 10112 in the first conductor part 1011 is the same as the number of the sensitive element 102a to the sensitive element 102n, for example, the number of the sensitive element electrodes 10112 may be 16.

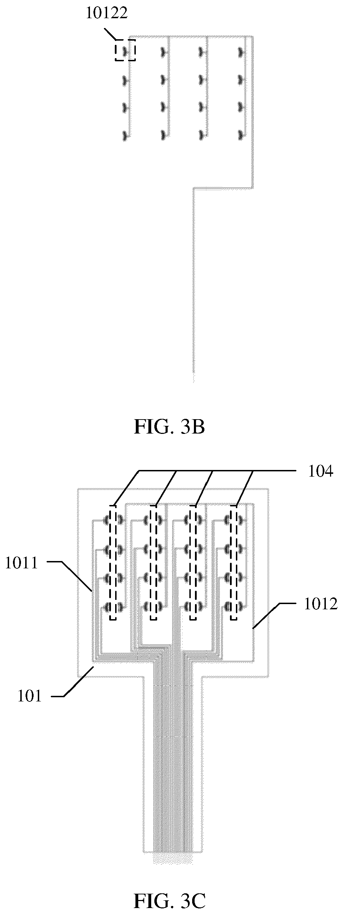

In an embodiment, when the number of the sensitive elements 102a to the sensitive elements 102n is 16, and the arrangement manner is four rows and four columns, for the pattern of the second conductor part 1012, further refer to FIG. 3B. FIG. 3B is a diagram of a pattern of a second conductor part according to this application. As shown in FIG. 3B, the second conductor part 1012 includes a plurality of sensitive element electrodes 10122, and one edge of the sensitive element electrode 10122 is in an arc shape. A number of the sensitive element electrodes 10122 in the second conductor part 1012 is the same as the number of the sensitive element 102a to the sensitive element 102n, for example, the number of the sensitive element electrodes 10122 may be 16.

In an embodiment, each sensitive element in the sensitive element 102a to the sensitive element 102n corresponds to one sensitive element electrode 10112 and one sensitive element electrode 10122, and the one sensitive element electrode 10112 and the one sensitive element electrode 10122 corresponding to each sensitive element are configured to be electrically connected to the corresponding sensitive element.

In an embodiment, for arrangement manners of the first conductor part 1011 shown in FIG. 3A and the second conductor part 1012 shown in FIG. 3B on the third substrate 101, further refer to FIG. 3C. FIG. 3C is a diagram of another structure of a third substrate according to this application. As shown in FIG. 3C, the first hollow part 104 includes a plurality of hollow sub-parts, an electrode on a left side of each hollow sub-part in the plurality of hollow sub-parts is the sensitive element electrode 10112 in the first conductor part 1011, and an electrode on a right side of each hollow sub-part is the sensitive element electrode 10122 in the second conductor part 1012.

In an embodiment, a number of the plurality of hollow sub-parts in the first hollow part 104 is determined based on the arrangement manner of the sensitive element 102a to the sensitive element 102n. For example, as shown in FIG. 2C and FIG. 3C, when the arrangement manner of the sensitive element 102a to the sensitive element 102n is four rows and four columns, the number of the plurality of hollow sub-parts in the first hollow part 104 is 4.

In an embodiment, the sensitive element 102a to the sensitive element 102n may be sensitive elements of a same type, or may be sensitive elements of different types. In this application, an electronic element that is in the resonant sensor 1 and that is sensitive to sensing physical, chemical, and biological information and converts the information into electrical information may be the sensitive element, and the sensitive element may also be referred to as a sensitive component.

In an embodiment, the sensitive element 102a to the sensitive element 102n each include at least one of a crystal oscillator temperature sensitive element and a crystal oscillator pressure sensitive element. Specifically, the sensitive element 102a to the sensitive element 102n are crystal oscillator temperature sensitive elements, the sensitive element 102a to the sensitive element 102n are crystal oscillator pressure sensitive elements, or some of the sensitive element 102a to the sensitive element 102n are crystal oscillator temperature sensitive elements and the other are crystal oscillator pressure sensitive elements. The crystal oscillator temperature sensitive element is configured to collect a temperature of a to-be-detected object, and the crystal oscillator pressure sensitive element is configured to collect a pressure of the to-be-detected object.

In an embodiment, the resonant sensor 1 may be disposed inside the to-be-detected object, or may be disposed outside the to-be-detected object. When the resonant sensor 1 is disposed outside the to-be-detected object, the resonant sensor 1 may be closely attached to an outer surface of the to-be-detected object, or disposed at a specific distance from the to-be-detected object. The specific distance may be a distance that ensures detection performance of the resonant sensor 1. The to-be-detected object provided in this application may be determined based on an actual application scenario of the resonant sensor 1. This is not limited herein. For example, in an electric vehicle application scenario, the to-be-detected object may be a power battery.

In an embodiment, each sensitive element in the sensitive element 102a to the sensitive element 102n includes a crystal oscillator, a first electrode, and a second electrode. The first electrode of each sensitive element is electrically connected to the first conductor part 1011, and the second electrode of each sensitive element is electrically connected to the second conductor part 1012, thereby improving reliability and stability of the sensitive element. The crystal oscillator includes but is not limited to a piezoelectric crystal oscillator or a temperature-compensated crystal oscillator. When the crystal oscillator is the piezoelectric crystal oscillator, the sensitive element is the crystal oscillator pressure sensitive element. When the crystal oscillator is the temperature-compensated crystal oscillator, the sensitive element is the crystal oscillator temperature sensitive element.

In an embodiment, a first electrode and a second electrode of at least one sensitive element in the sensitive element 102a to the sensitive element 102n are made by using a radio frequency magnetron sputtering and electroplating process, thereby improving corrosion resistance of the sensitive element.

In an embodiment, a first electrode of each sensitive element in the sensitive element 102a to the sensitive element 102n is electrically connected to the first conductor part 1011 through conductive adhesive, and a second electrode of each sensitive element is electrically connected to the second conductor part 1012 through conductive adhesive. The conductive adhesive is adhesive that has specific conductivity after being cured or dried. The conductive adhesive is configured to: connect the first electrode of each sensitive element and the first conductor part 1011 together, so that an electrical path is formed between the first electrode of each sensitive element and the first conductor part 1011, and connect the second electrode of each sensitive element and the second conductor part 1012 together, so that an electrical path is formed between the first electrode of each sensitive element and the second conductor part 1012, thereby supplying power to each sensitive element.

In an embodiment, at least one of the first electrode of each sensitive element and the first conductor part 1011 is coated with the conductive adhesive. Specifically, the first electrode of the at least one sensitive element is coated with the conductive adhesive, or the first conductor part 1011 is coated with the conductive adhesive, which has lower costs. Alternatively, both the first electrode of the at least one sensitive element and the first conductor part 1011 are coated with the conductive adhesive, so that a more reliable and stable electrical connection can be established between the first electrode of the at least one sensitive element and the first conductor part 1011, thereby improving reliability and stability of the sensitive element and having low costs and a simple operation procedure.

In an embodiment, at least one of the second electrode of each sensitive element and the second conductor part 1012 is coated with the conductive adhesive. Specifically, the second electrode of the at least one sensitive element is coated with the conductive adhesive, or the second conductor part 1012 is coated with the conductive adhesive, which has lower costs. Alternatively, both the second electrode of the at least one sensitive element and the second conductor part 1012 are coated with the conductive adhesive, so that a more reliable and stable electrical connection can be established between the second electrode of the at least one sensitive element and the second conductor part 1012, thereby improving reliability and stability of the sensitive element and having low costs and a simple operation procedure.

In an embodiment, an electrode material of the first electrode and the second electrode of each sensitive element in the sensitive element 102a to the sensitive element 102n includes but is not limited to aluminum (Al), gold (Au), platinum (Pt), copper (Cu), platinum titanium (PtTi), AuPtTi, or NiCr. A made material of each sensitive element includes but is not limited to at least one of a quartz (SiO₂) crystal, a Ca₃TaGa₃Si₂O₁₄ (which may be referred to as CTGS for short) crystal, and a lanthanum gallium silicate (La₂Ga₅SiO₁₄, which may be referred to as LGS for short) crystal. A cut shape of the crystal includes but is not limited to at least one of an AT cut shape, an SC cut shape, an X cut shape, and a Y cut shape.

In an embodiment, a thickness of each sensitive element in the sensitive element 102a to the sensitive element 102n is greater than or equal to 100 µm and less than or equal to 600 µm. A shape of each sensitive element includes but is not limited to a rectangle, a square, or a circle.

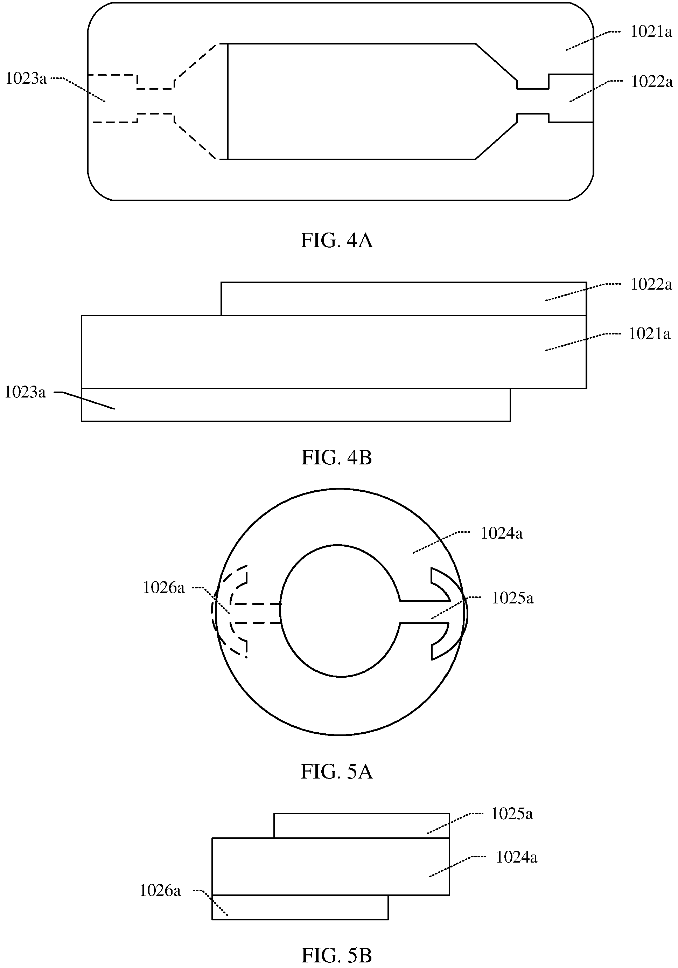

In an embodiment, when a shape of the at least one sensitive element in the sensitive element 102a to the sensitive element 102n is a rectangle, an area of each sensitive element in the at least one sensitive element is greater than or equal to 2.8 mm x 4 mm and less than or equal to 5.5 mm x 3.5 mm. For ease of description, the following uses the sensitive element 102a as an example to describe a structure of the sensitive element. Details are not described below again. For a structure of the sensitive element 102a, refer to FIG. 4A. FIG. 4A is a top view of a rectangular sensitive element according to this application. As shown in FIG. 4A, the sensitive element 102a includes a crystal oscillator 1021a, a first electrode 1022a, and a second electrode 1023a, and a shape of the sensitive element 102a is a rectangle.

In an embodiment, for a main view corresponding to FIG. 4A, refer to FIG. 4B. FIG. 4B is a main view of a rectangular sensitive element according to this application. As shown in FIG. 4B, the first electrode 1022a and the second electrode 1023a are disposed opposite to each other on two sides of the crystal oscillator 1021a. The first electrode 1022a is disposed above the crystal oscillator 1021a, and therefore the first electrode 1022a may also be referred to as an upper electrode. The second electrode 1023a is disposed below the crystal oscillator 1021a, and therefore the second electrode 1023a may also be referred to as a lower electrode.

It may be understood that, when the shape of the at least one sensitive element in the sensitive element 102a to the sensitive element 102n is a rectangle, a structure of the at least one sensitive element is shown in FIG. 4A and FIG. 4B.

In an embodiment, when the shape of the at least one sensitive element is a circle, a diameter of each sensitive element in the at least one sensitive element is greater than or equal to 3 mm and less than or equal to 6 mm. The sensitive element 102a is used as an example to describe a structure of the sensitive element. For the structure of the sensitive element 102a, further refer to FIG. 5A. FIG. 5A is a top view of a circular sensitive element according to this application. As shown in FIG. 5A, the sensitive element 102a includes a crystal oscillator 1024a, a first electrode 1025a, and a second electrode 1026a, and a shape of the sensitive element 102a is a circle.

In an embodiment, for a main view corresponding to FIG. 5A, refer to FIG. 5B. FIG. 5B is a main view of a circular sensitive element according to this application. As shown in FIG. 5B, the first electrode 1025a and the second electrode 1026a are disposed opposite to each other on two sides of the crystal oscillator 1024a. The first electrode 1025a is disposed above the crystal oscillator 1024a. The second electrode 1026a is disposed below the crystal oscillator 1024a.

It may be understood that, when the shape of the at least one sensitive element in the sensitive element 102a to the sensitive element 102n is a circle, a structure of the at least one sensitive element is shown in FIG. 5A and FIG. 5B.

In an embodiment, a part of the first substrate 20 is isolated from a corresponding part of the sensor body 10, and the isolation means no contact. Along a thickness direction of the second substrate 100, a projection of the part of the first substrate 20 on a surface of the second substrate 100 falls in an area in which the corresponding part of the sensor body 10 is located, and the surface of the second substrate 100 is a surface that is of the second substrate 100 and that faces the first substrate 20.

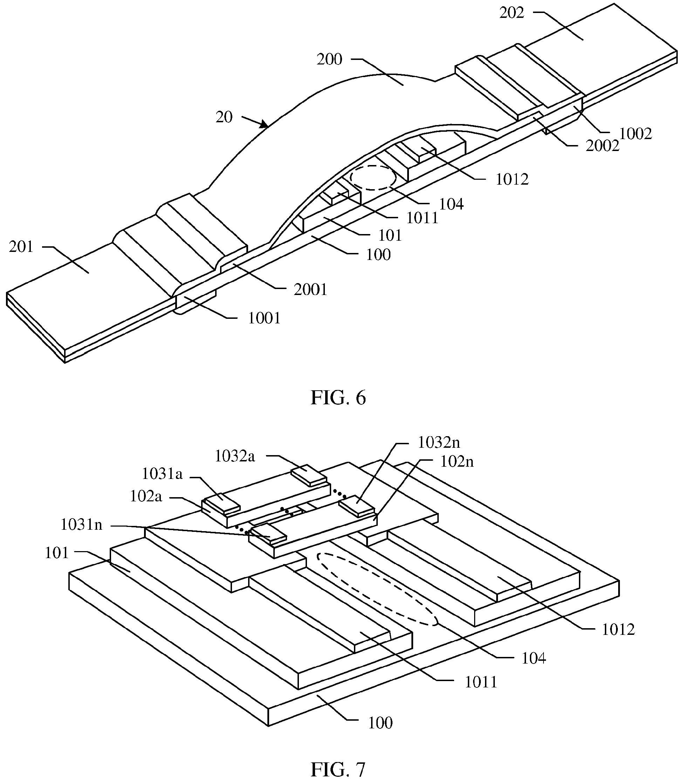

Specifically, as shown in FIG. 6, the first substrate 20 includes a protection part 200, a connection part 201, and a connection part 202. An edge of the protection part 200 is securely in contact with the second substrate 100 to form protection space. The third substrate 101, the sensitive element 102a to the sensitive element 102n, and the support component 103 are disposed in the protection space. Each of the connection part 201 and the connection part 202 is configured to be fastened to an end part of the protection part 200 and an end part of the second substrate 100. The connection part 201 is configured to fasten to an end part 2001 of the protection part 200 and an end part 1001 of the second substrate 100. The connection part 202 is configured to fasten to an end part 2002 of the protection part 200 and an end part 1002 of the second substrate 100.

The protection space is used to physically protect the third substrate 101, the sensitive element 102a to the sensitive element 102n, and the support component 103, the protection part 200, the connection part 201, and the connection part 202 are jointly used to physically protect the second substrate 100, thereby improving reliability of the resonant sensor 1 and prolonging a service life of the resonant sensor 1.

In an embodiment, the part of the first substrate 20 may be the protection part 200, and the corresponding part of the sensor body 10 may be the third substrate 101, the sensitive element 102a to the sensitive element 102n, and the support component 103. The protection part 200 is not in contact with the third substrate 101, the sensitive element 102a to the sensitive element 102n, and the support component 103. A structure of the first substrate 20 provided in this application includes but is not limited to the structure shown in FIG. 6, and may be another structure. The another structure meets a requirement that the first substrate 20 is disposed on an outer side of the sensor body 10 and is configured to protect the sensor body 10. This is not limited herein.

In an embodiment, the resonant sensor 1 includes a first cavity, and the first cavity is formed by enclosing a side that is of the sensitive element 102a to the sensitive element 102n and that faces the protection part 200, the support component 103, and the protection part 200. It may be understood that the first cavity is located above the sensitive element 102a to the sensitive element 102n and is configured to reduce force exerted on the sensitive element 102a to the sensitive element 102n, thereby further improving detection performance of the resonant sensor 1.

In an embodiment, the resonant sensor 1 further includes a second cavity, and the second cavity is formed by enclosing the first conductor part 1011, the second conductor part 1012, the sensitive element 102a to the sensitive element 102n, and an area that corresponds to the first hollow part 104 and that is on the second substrate 100. It may be understood that the second cavity is located below the sensitive element 102a to the sensitive element 102n and is configured to reduce force exerted on the sensitive element 102a to the sensitive element 102n, thereby further improving detection performance of the resonant sensor 1.

In an embodiment, when the resonant sensor 1 includes the first cavity and the second cavity, a cavity structure having cavities on both the upper part and the lower part of the sensitive element 102a to the sensitive element 102n is formed, thereby further reducing force exerted on the sensitive element 102a to the sensitive element 102n, and improving detection performance of the resonant sensor 1.

In an embodiment, a made material of the support component 103 includes but is not limited to at least one of a flexible substrate, high-temperature wear-resistant resin, and another rigid material.

In an embodiment, the support component 103 includes M support sub-parts, and M is a positive integer greater than or equal to 2. Each sensitive element in the sensitive element 102a to the sensitive element 102n corresponds to at least two support sub-parts, one end that is of each sensitive element and that is electrically connected to the first conductor part 1011 has at least one support sub-part, and the other end that is of the sensitive element and that is electrically connected to the second conductor part 1012 also has at least one support sub-part. A number of support sub-parts at one end that is of each sensitive element and that is electrically connected to the first conductor part 1011 may be the same as or different from a number of support sub-parts at the other end that is of the sensitive element and that is electrically connected to the second conductor part 1012. It may be understood that the M support sub-parts are configured to support the first substrate 20, so that the first substrate 20 is isolated from the sensitive element 102a to the sensitive element 102n, thereby improving stability and reliability of the sensitive element, and further improving detection performance of the resonant sensor 1.

In an embodiment, shapes of the M support sub-parts each include at least one of a rectangle, a square, a wedge, a circle, and an irregular shape.

In an embodiment, each sensitive element in the at least one sensitive element in the sensitive element 102a to the sensitive element 102n corresponds to two support sub-parts, and the two support sub-parts are symmetrically disposed, thereby improving stability of an entire structure of the sensor.

In an embodiment, each sensitive element in the at least one sensitive element in the sensitive element 102a to the sensitive element 102n corresponds to three support sub-parts, and the three support sub-parts are staggered or disposed in a triangular manner.

In an embodiment, each sensitive element in the at least one sensitive element in the sensitive element 102a to the sensitive element 102n corresponds to four support sub-parts, and the four support sub-parts are symmetrically disposed, staggered, or disposed in a quadrilateral manner.

In an embodiment, at least two support sub-parts corresponding to each sensitive element in the sensitive element 102a to the sensitive element 102n are configured to be bonded to the corresponding sensitive element. Specifically, the at least two support sub-parts are configured to be bonded to the corresponding sensitive element through a high temperature binder. The at least two support sub-parts are configured to support the first substrate 20, so that the first substrate 20 is isolated from the corresponding sensitive element, thereby improving stability and reliability of the sensitive element, and further improving detection performance of the resonant sensor 1.

In an embodiment, the at least two support sub-parts corresponding to each sensitive element are configured to be bonded to an outer surface that is of the corresponding sensitive element and that is away from the third substrate 101, and are specifically bonded to an outer surface that is of the corresponding sensitive element and that faces away from the third substrate 101. In another embodiment, the at least two support sub-parts corresponding to each sensitive element are configured to be bonded to end parts of the outer surface that is of the corresponding sensitive element and that is away from the third substrate 101, and are specifically bonded to end parts of an outer surface that is of the corresponding sensitive element and that faces away from the third substrate 101. The end part refers to an outermost edge part. It may be understood that the at least two support sub-parts are configured to support the first substrate 20, so that the first substrate 20 is isolated from the corresponding sensitive element, thereby improving stability and reliability of the sensitive element, and further improving detection performance of the resonant sensor 1.

In an embodiment, a thickness of each support sub-part in the at least two support sub-parts may be greater than or equal to 25 µm and less than or equal to 100 µm. A length and a width of each support sub-part each may be greater than or equal to 1 mm and less than or equal to 3 mm.

In an embodiment, when each sensitive element in the sensitive element 102a to the sensitive element 102n corresponds to two support sub-parts, a structure of the sensor body 10 is shown in FIG. 7. The support component 103 includes a support sub-part 1031a to a support sub-part 1031n and a support sub-part 1032a to a support sub-part 1032n, which may be simply referred to as the support sub-part 1031a to the support sub-part 1032n. Shapes of the support sub-part 1031a to the support sub-part 1032n are rectangles. The sensitive element 102a corresponds to the support sub-part 1031a and the support sub-part 1032a, and the support sub-part 1031a and the support sub-part 1032a are symmetrically bonded to two end parts of an outer surface that are of the sensitive element 102a and that faces away from the third substrate 101; ...; and the sensitive element 102n corresponds to the support sub-part 1031n and the support sub-part 1032n, and the support sub-part 1031n and the support sub-part 1032n are symmetrically bonded to two end parts of an outer surface that is of the sensitive element 102n and that faces away from the third substrate 101.

In an embodiment, when the support component 103 includes M support sub-parts, a thickness of at least two support sub-parts corresponding to each sensitive element in the sensitive element 102a to the sensitive element 102n is greater than a thickness of the corresponding sensitive element, and the at least two support sub-parts are disposed outside the corresponding sensitive element and are bonded to the third substrate 101. Specifically, the at least two support sub-parts are bonded to the third substrate 101 through a high temperature binder. That the at least two support sub-parts are disposed outside the corresponding sensitive element refers to that the at least two support sub-parts are outside the corresponding sensitive element and are not in contact with an outer surface that is of the corresponding sensitive element and that faces away from the first conductor part 1011 and the second conductor part 1012. It may be understood that the at least two support sub-parts are configured to support the first substrate 20, so that the first substrate 20 is isolated from the corresponding sensitive element, thereby improving stability and reliability of the sensitive element, and further improving detection performance of the resonant sensor 1.

In an embodiment, at least two support sub-parts corresponding to each sensitive element are disposed outside the corresponding sensitive element, and are spaced with the corresponding sensitive element. Being spaced means no contact. It may be understood that the at least two support sub-parts are configured to support the first substrate 20, so that the first substrate 20 is isolated from the corresponding sensitive element, thereby improving stability and reliability of the sensitive element, and further improving detection performance of the resonant sensor 1. A distance between each support sub-part in the at least two support sub-parts and the corresponding sensitive element is greater than or equal to 2 mm and less than or equal to 2.5 mm. A thickness of each support sub-part is 1.5 times to 2 times that of the corresponding sensitive element. An area of each support sub-part is greater than or equal to 1 mm x 2 mm and less than or equal to 1.5 mm x 2.5 mm.

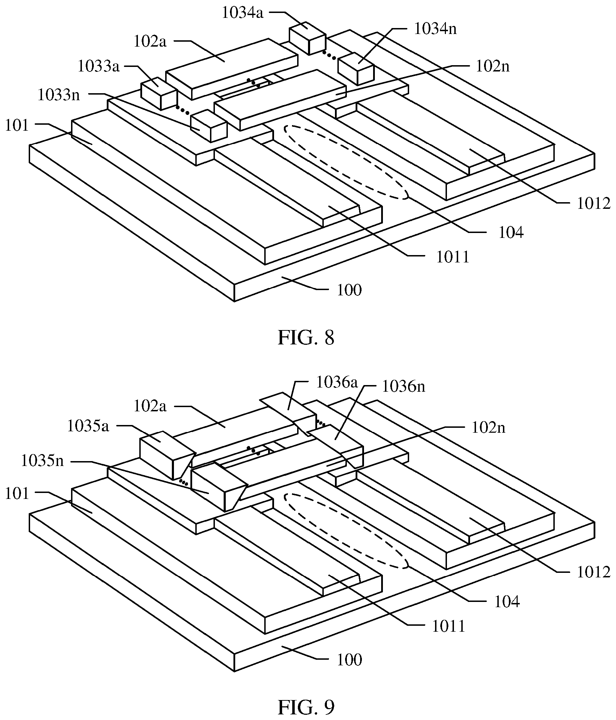

When each sensitive element in the sensitive element 102a to the sensitive element 102n corresponds to two support sub-parts, a structure of the sensor body 10 is shown in FIG. 8. The support component 103 includes a support sub-part 1033a to a support sub-part 1033n and a support sub-part 1034a to a support sub-part 1034n, which may be simply referred to as the support sub-part 1033a to the support sub-part 1034n. Shapes of the support sub-part 1033a to the support sub-part 1034n are rectangles. The sensitive element 102a corresponds to the support sub-part 1033a and the support sub-part 1034a, and the support sub-part 1033a and the support sub-part 1034a are symmetrically disposed outside the sensitive element 102a and spaced with the sensitive element 102a; ...; and the sensitive element 102n corresponds to the support sub-part 1033n and the support sub-part 1034n, and the support sub-part 1033n and the support sub-part 1034n are symmetrically disposed outside the sensitive element 102n and are spaced with the sensitive element 102n.

In an embodiment, the at least two support sub-parts corresponding to each sensitive element are all wedge-shaped support parts, the at least two support sub-parts are disposed outside the corresponding sensitive element, and wedge-shaped surfaces of the at least two support sub-parts are clamped to end parts of the corresponding sensitive element. It may be understood that the at least two support sub-parts are configured to support the first substrate 20, so that the first substrate 20 is isolated from the corresponding sensitive element, thereby improving stability and reliability of the sensitive element, and further improving detection performance of the resonant sensor 1. In addition, the wedge-shaped surface is used to reduce force exerted on the corresponding sensitive element, thereby further improving detection performance of the resonant sensor 1. A made material of the wedge-shaped support part is high-temperature wear-resistant resin, and the wedge-shaped support part is made by using a three-dimensional (3 dimensions, 3D) printing technology. The three-dimensional printing technology may also be referred to as a 3D printing technology.

When each sensitive element in the sensitive element 102a to the sensitive element 102n corresponds to two support sub-parts, a structure of the sensor body 10 is shown in FIG. 9. The support component 103 includes a support sub-part 1035a to a support sub-part 1035n and a support sub-part 1036a to a support sub-part 1036n, which may be simply referred to as the support sub-part 1035a to the support sub-part 1036n. The support sub-part 1035a to the support sub-part 1036n are all wedge-shaped support parts. The sensitive element 102a corresponds to the support sub-part 1035a and the support sub-part 1036a, the support sub-part 1035a and the support sub-part 1036a are bonded to the third substrate 101 and symmetrically disposed outside the sensitive element 102a, and a wedge-shaped surface of the support sub-part 1035a and a wedge-shaped surface of the support sub-part 1036a are respectively clamped with two end parts of the sensitive element 102a; ...; and the sensitive element 102n corresponds to the support sub-part 1035n and the support sub-part 1036n, the support sub-part 1035n and the support sub-part 1036n are bonded to the third substrate 101 and symmetrically disposed outside the sensitive element 102n, and a wedge-shaped surface of the support sub-part 1035n and a wedge-shaped surface of the support sub-part 1036n are respectively clamped with two end parts of the sensitive element 102n.

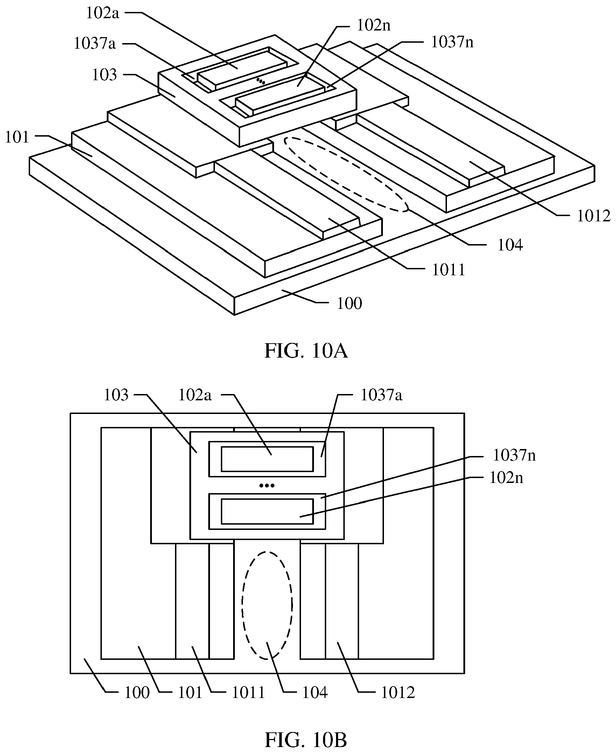

In an embodiment, a structure of the sensor body 10 may also be shown in FIG. 10A. The support component 103 includes a second hollow part 1037a to a second hollow part 1037n. Each second hollow part in the second hollow part 1037a to the second hollow part 1037n penetrates the support component 103 along a thickness direction of the support component 103. A thickness of the support component 103 is greater than a thickness of each sensitive element in the sensitive element 102a to the sensitive element 102n. The support component 103 is configured to be bonded to the third substrate 101. Specifically, the support component 103 is configured to be bonded, through a high temperature binder, to an outer surface that is of the third substrate 101 and that faces away from the second substrate 100. Each sensitive element is correspondingly disposed in an area enclosed by one second hollow part, that is, an orthographic projection of one second hollow part corresponding to each sensitive element on the third substrate 101 completely covers an orthographic projection of the corresponding sensitive element on the third substrate 101. In FIG. 10A, the sensitive element 102a is disposed in an area enclosed by the second hollow part 1037a, ..., and the sensitive element 102n is disposed in an area enclosed by the second hollow part 1037n. A top view corresponding to FIG. 10A is shown in FIG. 10B.

The thickness of the support component 103 is 1.5 times to 2 times that of each sensitive element in the sensitive element 102a to the sensitive element 102n. An area of the second hollow part corresponding to each sensitive element is 1.2 times that of the corresponding sensitive element. It may be understood that the support component 103 is configured to support the first substrate 20, so that the first substrate 20 is isolated from the sensitive element 102a to the sensitive element 102n, thereby improving stability and reliability of the sensitive element, and improving detection performance of the resonant sensor 1.

In an embodiment, shapes of the second hollow part 1037a to the second hollow part 1037n each include but are not limited to at least one of a rectangle, a square, and a circle, and may be specifically determined based on a shape of the corresponding sensitive element and an actual processing process of the resonant sensor 1. This is not limited herein. As shown in FIG. 10A, when the shapes of the sensitive element 102a to the sensitive element 102n are rectangles, the shapes of the second hollow part 1037a to the second hollow part 1037n are also rectangles.

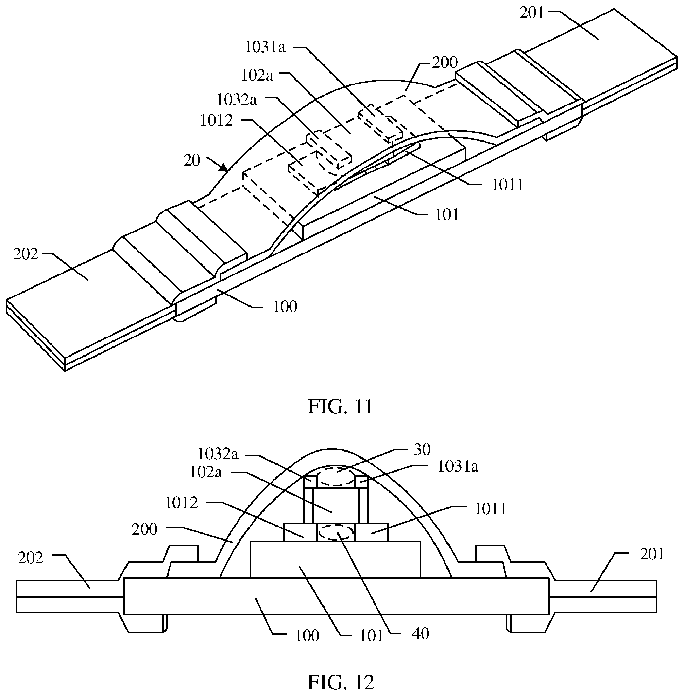

In an embodiment, when the resonant sensor 1 includes one sensitive element, and a shape of the sensitive element is a circle, for an overall structure of the resonant sensor 1, refer to FIG. 11. FIG. 11 is a diagram of another structure of a resonant sensor according to this application. As shown in FIG. 11, the resonant sensor 1 includes a first substrate 20, a second substrate 100, a third substrate 101, a sensitive element 102a, a support sub-part 1031a, and a support sub-part 1032a. A shape of the sensitive element 102a is a circle, and shapes of the support sub-part 1031a and the support sub-part 1032a are rectangles.

In an embodiment, for a main view of FIG. 11, refer to FIG. 12. FIG. 12 is a main view of a resonant sensor according to this application. As shown in FIG. 12, the resonant sensor 1 includes a first cavity 30 and a second cavity 40. The first cavity 30 is formed by enclosing a surface that is of the sensitive element 102a and that faces the protection part 200, the support sub-part 1031a, the support sub-part 1032a, and the protection part 200, and is located above the sensitive element 102a. The second cavity 40 is formed by enclosing the first conductor part 1011, the second conductor part 1012, the sensitive element 102a to the sensitive element 102n, and an area that corresponds to the first hollow part 104 and that is on the second substrate 100, and is located below the sensitive element 102a. Therefore, a cavity structure having cavities on both the upper part and the lower part of the sensitive element 102a is formed, to reduce force exerted on the sensitive element 102a and further improve detection performance of the resonant sensor 1.

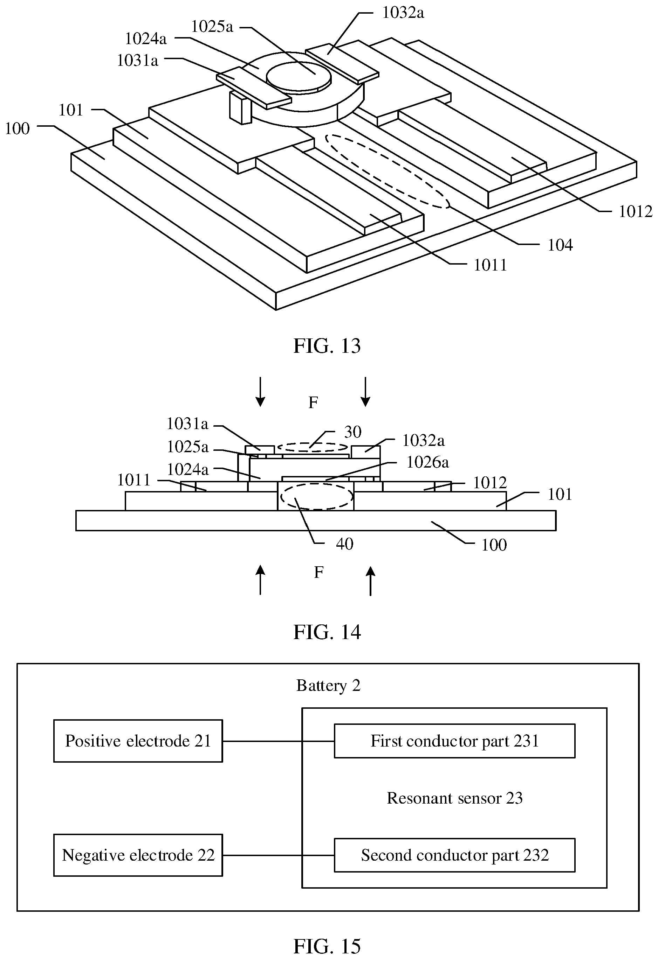

In an embodiment, when the first substrate 20 in FIG. 11 is removed, refer to FIG. 13. FIG. 13 is a diagram of another structure of a sensor body according to this application. As shown in FIG. 13, the support sub-part 1031a and the support sub-part 1032a are symmetrically bonded to two end parts of an outer surface that is of the crystal oscillator 1024a and that faces away from the third substrate 101. A main view corresponding to FIG. 13 is shown in FIG. 14. The first cavity 30 is disposed above the sensitive element 102a, and the second cavity 40 is disposed below the sensitive element 102a. The first cavity 30 and the second cavity 40 are configured to reduce force F exerted on the sensitive element 102a, thereby further improving detection performance of the resonant sensor 1.

FIG. 15 is a block diagram of a structure of a battery according to this application. As shown in FIG. 15, a battery 2 includes a positive electrode 21, a negative electrode 22, and a resonant sensor 23. The positive electrode 21 is electrically connected to a first conductor part 231 in the resonant sensor 23, and the negative electrode 22 is electrically connected to a second conductor part 232 in the resonant sensor 23. Because the resonant sensor 23 is more flexible, the resonant sensor 23 may be better compatible with a corrosive electrochemical environment inside the battery 2, so that use performance and precision of the resonant sensor 23 are not affected. In addition, the resonant sensor 23 is smaller in size, impact on a capacity of the battery 2 is little, and industrial production of the battery 2 is easy to be implemented.

In an embodiment, when the battery 2 supplies power, the resonant sensor 23 is configured to collect an internal battery parameter of the battery 2, and the internal battery parameter may be used to determine whether the battery 2 is thermal runaway. The internal battery parameter may include but is not limited to parameters corresponding to an internal temperature, an internal pressure, and an operating status of the battery 2. It may be understood that, the resonant sensor 23 collects the internal battery parameter of the battery 2 in real time to determine whether the battery 2 is thermal runaway, and sampling precision is higher, thereby improving safety and reliability of using the battery, and prolonging a service life of the battery.

It may be understood that, for a specific structure of the resonant sensor 23, refer to the descriptions of the structure of the resonant sensor 1 in embodiments corresponding to FIG. 1 to FIG. 14. Details are not described herein again.

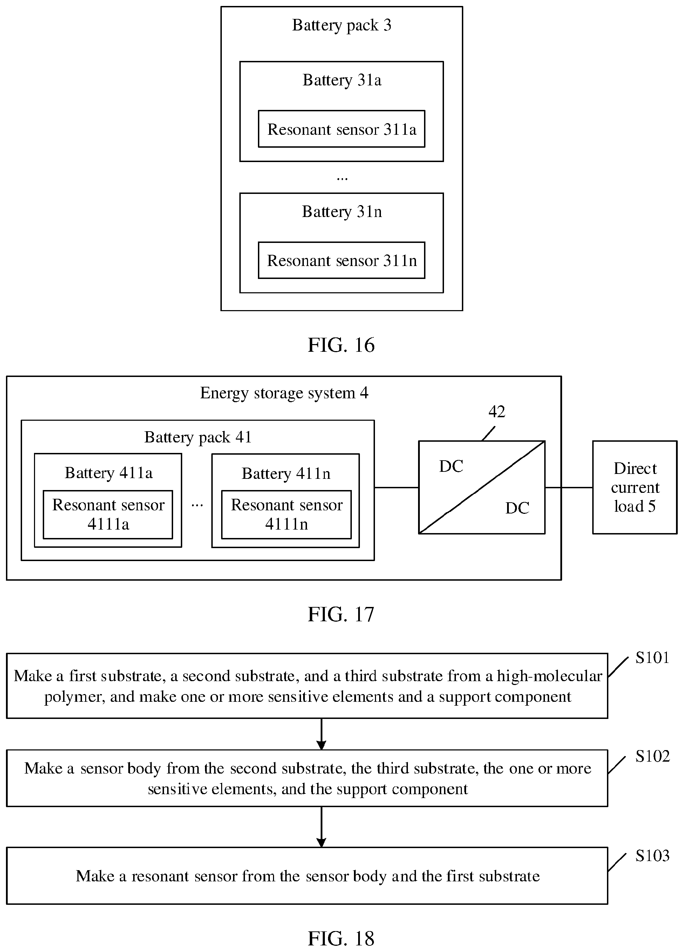

FIG. 16 is a block diagram of a structure of a battery pack according to this application. As shown in FIG. 16, a battery pack 3 includes a battery 31a to a battery 31n. The battery 31a includes a resonant sensor 311a, ..., and the battery 31n includes a resonant sensor 311n. A resonant sensor in each battery in the battery 31a to the battery 31n may be configured to collect an internal battery parameter of each battery to determine whether each battery is thermal runaway, thereby improving safety and reliability of the battery pack 3, and prolonging a service life of the battery pack 3.

It may be understood that, for specific structures of the resonant sensor 311a to the resonant sensor 311n, refer to the descriptions of the structure of the resonant sensor 1 in embodiments corresponding to FIG. 1 to FIG. 14. Details are not described herein again.

FIG. 17 is a block diagram of a structure of an energy storage system according to this application. As shown in FIG. 17, an energy storage system 4 includes a battery pack 41 and a direct current-direct current (direct current-direct current, DC-DC) converter 42. The battery pack 41 includes a battery 411a to a battery 411n. The battery 411a includes a resonant sensor 4111a, ..., and the battery 411n includes a resonant sensor 4111n.

In an embodiment, the direct current-direct current converter 42 is configured to supply power to a direct current load 5 based on direct currents provided by the battery 411a to the battery 411n. In a process of supplying power to the direct current load 5, a resonant sensor in each battery may collect an internal battery parameter of each battery to determine whether each battery is thermal runaway, thereby improving power supply safety and power supply reliability of the energy storage system 4.

It may be understood that, for specific structures of the resonant sensor 4111a to the resonant sensor 4111n, refer to the descriptions of the structure of the resonant sensor 1 in embodiments corresponding to FIG. 1 to FIG. 14. Details are not described herein again.

FIG. 18 is a schematic flowchart of a method for preparing a resonant sensor according to this application. The method is performed by a sensor manufacturing device. As shown in FIG. 18, the method includes the following step S101 to step S103.

Step S101: Make a first substrate, a second substrate, and a third substrate from a high-molecular polymer, and make one or more sensitive elements and a support component.

In an embodiment, the first substrate, the second substrate, and the third substrate are all flexible substrates. Therefore, a made resonant sensor may operate in an environment with a flexible feature requirement, thereby expanding an application field and an application scenario of the resonant sensor. The flexible substrate includes a high-molecular polymer, and the high-molecular polymer includes but is not limited to at least one of polyimide, polyvinylidene, polyethylene, and polypropylene.

In an embodiment, the sensor manufacturing device may cut the high-molecular polymer based on a size of each substrate in the first substrate, the second substrate, and the third substrate to make the first substrate, the second substrate, and the third substrate. The size of each substrate includes: a thickness of each substrate is greater than or equal to 25 µm and less than or equal to 100 µm, and a length and a width of each substrate each are greater than or equal to 25 mm and less than or equal to 160 mm.

In an embodiment, the sensor manufacturing device may perform optical-imaging pattern transfer and etching on the third substrate based on a pattern of the first conductor part and a pattern of the second conductor part, to make the first conductor part and the second conductor part on the third substrate. Processes such as optical-imaging pattern transfer and etching are collectively referred to as a flexible printed circuit board process. A made material of the first conductor part and the second conductor part includes but is not limited to aluminum (Al), gold (Au), platinum (Pt), copper (Cu), platinum titanium (PtTi), AuPtTi, or NiCr. A thickness of each of the first conductor part and the second conductor part is greater than or equal to 5 µm and less than or equal to 35 µm. The pattern of the first conductor part and the pattern of the second conductor part may be determined based on a number and an arrangement manner of the sensitive elements in the resonant sensor. For example, the pattern of the first conductor part and the pattern of the second conductor part are shown in FIG. 2A and FIG. 2B respectively, or the pattern of the first conductor part and the pattern of the second conductor part are shown in FIG. 3A and FIG. 3B respectively.

In an embodiment, because the first conductor part and the second conductor part are both made on the third substrate, to avoid a short circuit of the resonant sensor caused by contact between the first conductor part and the second conductor part, the sensor manufacturing device further hollows a part of the third substrate between the first conductor part and the second conductor part based on a shape of a first hollow part, so as to make the first hollow part between the first conductor part and the second conductor part. The shape of the first hollow part is determined based on the pattern of the first conductor part and the pattern of the second conductor part, and may be specifically a rectangle, a square, or an irregular shape.

In an embodiment, the sensor manufacturing device may make one or more sensitive elements from a crystal based on a crystal direction, a size, a shape, and a processing process of the sensitive element. The crystal includes but is not limited to at least one of a quartz crystal, a CTGS crystal, and a lanthanum gallium silicate crystal. A cut type of the crystal includes but is not limited to at least one of an AT cut type, an SC cut type, an X cut type, and a Y cut type.

In an embodiment, a shape of the sensitive element includes but is not limited to at least one of a rectangle, a square, and a circle. A size of the sensitive element includes: a thickness of the sensitive element is greater than or equal to 100 µm and less than or equal to 600 µm. When the shape of the sensitive element is a rectangle, an area of the sensitive element is greater than or equal to 2.8 mm x 4 mm and less than or equal to 5.5 mm x 3.5 mm. Alternatively, when the shape of the sensitive element is a circle, a diameter of the sensitive element is greater than or equal to 3 mm and less than or equal to 6 mm. The processing process of the sensitive element successively includes: cutting, thickness grinding, shaping, chamfering, etching or cleaning, electrode deposition, frequency tuning, radio frequency magnetron sputtering, electroplating, and other processes.

In an embodiment, each sensitive element in the one or more sensitive elements includes a crystal oscillator, a first electrode, and a second electrode, and the first electrode and the second electrode are disposed opposite to each other on two sides of the crystal oscillator. Processes such as cutting, thickness grinding, shaping, chamfering, etching or cleaning, electrode deposition, and frequency tuning in the processing processes of the sensitive element are used to prepare a crystal oscillator in each sensitive element. Processes such as radio frequency magnetron sputtering and electroplating in the processing processes of the sensitive element are used to prepare a first electrode and a second electrode in each sensitive element. An electrode material of the first electrode and the second electrode includes but is not limited to aluminum (Al), gold (Au), platinum (Pt), copper (Cu), platinum titanium (PtTi), AuPtTi, or NiCr.

In an embodiment, a made material of the support component includes but is not limited to at least one of a flexible substrate, high-temperature wear-resistant resin, and a rigid material.

In an embodiment, when the support component includes M support sub-parts, the sensor manufacturing device may make the M support sub-parts from the high-molecular polymer or the high-temperature wear-resistant resin based on sizes, shapes, and processing processes of the support sub-parts. Each sensitive element in the one or more sensitive elements corresponds to at least two support sub-parts, and M is a positive integer greater than or equal to 2. A size of the support sub-part may be determined based on a specific location of the support sub-part in the resonant sensor. A shape of the support sub-part includes but is not limited to at least one of a rectangle, a square, a wedge, a circle, and an irregular shape. Processing process of the support sub-part includes a cutting process or a 3D printing technology.

In an embodiment, when a made material of the support sub-part is a high-molecular polymer, a shape of the support sub-part includes but is not limited to at least one of a rectangle, a square, a circle, and an irregular shape, and a processing process is a cutting process. When a made material of the support sub-part is high-temperature wear-resistant resin, a shape of the support sub-part is a wedge, and a processing technology is a 3D printing technology.

In an embodiment, the sensor manufacturing device may make the support component from the high-molecular polymer based on a size, a shape, and a processing process of the support component. The support component includes at least one second hollow part, each second hollow part in the at least one second hollow part penetrates the support component along a thickness direction of the support component, and a thickness of the support component is greater than a thickness of each sensitive element in the one or more sensitive elements. The size of the support component includes an overall size of the support component and a size of each second hollow part in the at least one second hollow part. The shape of the support component includes an overall shape of the support component and a shape of the at least one second hollow part. The overall shape of the support component includes but is not limited to a square, a rectangle, a circle, or an irregular shape. The shape of the at least one second hollow part includes but is not limited to at least one of a square, a rectangle, or a circle. A processing process of the support component includes a cutting process.

The thickness of the support component is 1.5 times to 2 times that of each sensitive element in the one or more sensitive elements. An area of the second hollow part corresponding to each sensitive element is 1.2 times that of the corresponding sensitive element.

Step S102: Make a sensor body from the second substrate, the third substrate, the one or more sensitive elements, and the support component.

In an embodiment, the second substrate and the third substrate are stacked, the third substrate includes a first conductor part and a second conductor part, both the first conductor part and the second conductor part are located on a side that is of the third substrate and that is away from the second substrate, and a first hollow part is disposed between the first conductor part and the second conductor part, where the first hollow part is configured to isolate the first conductor part from the second conductor part, to avoid a short circuit of the resonant sensor. The one or more sensitive elements are disposed on an outer side that is of the third substrate and that is away from the second substrate, and each sensitive element is electrically connected to the first conductor part and the second conductor part. In this case, the third substrate may serve as an electrical connection carrier of the one or more sensitive elements and physically protect the one or more sensitive elements, thereby improving stability and reliability of the sensitive element. The support component is disposed on an outer side that is of the third substrate and that is away from the second substrate and is configured to support the first substrate, so that the first substrate is isolated from the one or more sensitive elements, and the first substrate may further physically protect the one or more sensitive elements, thereby improving stability and reliability of the sensitive element and further improving detection performance of the resonant sensor.

In an embodiment, the sensor manufacturing device may make a sensor base from the second substrate and the third substrate. Specifically, hot pressing is performed on the second substrate and the third substrate to make the sensor base. The hot pressing is a process of simultaneously heating and pressing the second substrate and the third substrate that are formed after being paved, and making the sensor base having a specific mechanical strength and water resistance performance.

Further, the sensor manufacturing device may dispose the one or more sensitive elements on the sensor base to obtain a sensor base having one or more sensitive elements. A first electrode of each sensitive element in the one or more sensitive elements is electrically connected to the first conductor part, and a second electrode of each sensitive element is electrically connected to the second conductor part. Specifically, the sensor manufacturing device bonds the one or more sensitive elements to the sensor base through conductive adhesive. The first electrode of each sensitive element is electrically connected to the first conductor part through the conductive adhesive, and the second electrode of each sensitive element is electrically connected to the second conductor part through the conductive adhesive. At least one of the first electrode of each sensitive element and the first conductor part is coated with the conductive adhesive, and at least one of the second electrode of each sensitive element and the second conductor part is coated with the conductive adhesive.

Further, the sensor manufacturing device may dispose the support component on the sensor base having one or more sensitive elements to make the sensor body. Specifically, for each sensitive element in the one or more sensitive elements, the sensor manufacturing device may dispose at least one support sub-part in the M support sub-parts at one end that is of each sensitive element and that is electrically connected to the first conductor part, and dispose at least one support sub-part at the other end that is of the sensitive element and that is electrically connected to the second conductor part.

In an embodiment, the sensor manufacturing device may bond at least two support sub-parts corresponding to each sensitive element to the corresponding sensitive element to make the sensor body. Specifically, the sensor manufacturing device may bond the at least two support sub-parts corresponding to each sensitive element to the corresponding sensitive element through a high temperature binder, to make the sensor body. The at least two support sub-parts are bonded to an outer surface that is of the corresponding sensitive element and that is away from the third substrate, or the at least two support sub-parts are bonded to end parts of the outer surface that is of the corresponding sensitive element and that is away from the third substrate. A thickness of each support sub-part in the at least two support sub-parts may be greater than or equal to 25 µm and less than or equal to 100 µm. A length and a width of each support sub-part each may be greater than or equal to 1 mm and less than or equal to 3 mm.

In an embodiment, the sensor manufacturing device may bond at least two support sub-parts corresponding to each sensitive element to the third substrate, to make the sensor body. The at least two support sub-parts are disposed outside the corresponding sensitive element. Specifically, the sensor manufacturing device may bond the at least two support sub-parts corresponding to each sensitive element to the third substrate through a high temperature binder, to make the sensor body.

In an embodiment, the at least two support sub-parts are disposed outside the corresponding sensitive element, and are spaced with the corresponding sensitive element. A distance between each support sub-part in the at least two support sub-parts and the corresponding sensitive element is greater than or equal to 2 mm and less than or equal to 2.5 mm. A thickness of each support sub-part in the at least two support sub-parts is 1.5 times to 2 times that of the corresponding sensitive element. An area of each support sub-part is greater than or equal to 1 mm x 2 mm and less than or equal to 1.5 mm x 2.5 mm.

In an embodiment, when the at least two support sub-parts are all wedge-shaped support parts, the at least two support sub-parts are disposed outside the corresponding sensitive element, and wedge-shaped surfaces of the at least two support sub-parts are clamped to end parts of the corresponding sensitive element, so that the wedge-shaped surface is used to reduce force exerted on the corresponding sensitive element, thereby further improving detection performance of the resonant sensor.

In an embodiment, when the support component includes at least one second hollow part, the sensor manufacturing device may bond the support component to the third substrate. Specifically, the support component is bonded, through high-temperature adhesive, to an outer surface that is of the third substrate and that faces away from the second substrate, and each sensitive element is correspondingly disposed in an area enclosed by one second hollow part. The thickness of the support component is 1.5 times to 2 times that of each sensitive element in the one or more sensitive elements. An area of the second hollow part corresponding to each sensitive element is 1.2 times that of the corresponding sensitive element.

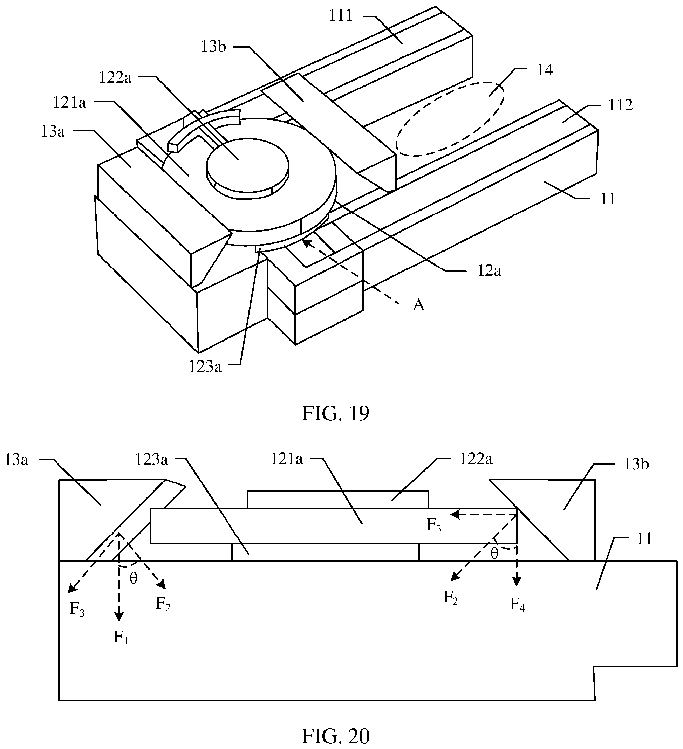

In an embodiment, when the at least two support sub-parts corresponding to each sensitive element are wedge-shaped support parts, the sensor body is a force-relieving structure and is configured to reduce force exerted on the one or more sensitive elements, thereby further improving detection performance of the resonant sensor. When the sensor body includes a circular sensitive element and the second substrate is removed, refer to FIG. 19. FIG. 19 is a diagram of a structure of a sensor body from which a second substrate is removed according to this application. As shown in FIG. 19, a third substrate 11 includes a first conductor part 111 and a second conductor part 112, and a first hollow part 14 is disposed between the first conductor part 111 and the second conductor part 112. A sensitive element 12a includes a crystal oscillator 121a, a first electrode 122a, and a second electrode 123a. The first electrode 122a is electrically connected to the first conductor part 111, and the second electrode 123a is electrically connected to the second conductor part 112. A wedge-shaped surface of a support sub-part 13a and a wedge-shaped surface of a support sub-part 13b are respectively clamped to two end parts of the crystal oscillator 121a.

In an embodiment, when observation is performed along a direction A shown in FIG. 19, refer to FIG. 20. FIG. 20 is a diagram of force analysis of a support sub-part according to this application. As shown in FIG. 20, a force-bearing status of the wedge-shaped surface of the support sub-part 13a is shown as F₁, F₂, and F₃, and a force-bearing status of the wedge-shaped surface of the support sub-part 13b is shown as F₂, F₃, and F₄. Included angles θ are oblique angles of the support sub-part 13a and the support sub-part 13b. It can be obtained by analyzing a force condition of the wedge-shaped surface of the support sub-part 13a and a force condition of the wedge-shaped surface of the support sub-part 13b that, the support sub-part 13a and the support sub-part 13b may reduce force exerted on the sensitive element 12a through the wedge-shaped surfaces of the support sub-part 13a and the support sub-part 13b, thereby improving detection performance of the resonant sensor.

Step S103: Make a resonant sensor from the sensor body and the first substrate.

In an embodiment, the sensor manufacturing device may perform hot-press packaging on the first substrate and the sensor body via a groove mold to make the resonant sensor. The hot-press packaging may be a process of simultaneously heating and pressing the first substrate and the sensor body that are formed after being paved, and making the resonant sensor that has a specific mechanical strength and water resistance performance.

In an embodiment, the first substrate includes a protection part and two connection parts, and the protection part is made of a groove mold. Two end parts of the protection part are securely in contact with the second substrate to form protection space, the third substrate, the one or more sensitive elements, and the support component are disposed in the protection space, and each connection part in the two connection parts is configured to be fastened to an end part of the protection part and an end part of the second substrate. The protection space is used to physically protect the third substrate, the one or more sensitive elements, and the support component, and the protection part and the two connection parts are jointly used to physically protect the second substrate, thereby improving reliability of the resonant sensor and prolonging a service life of the resonant sensor.

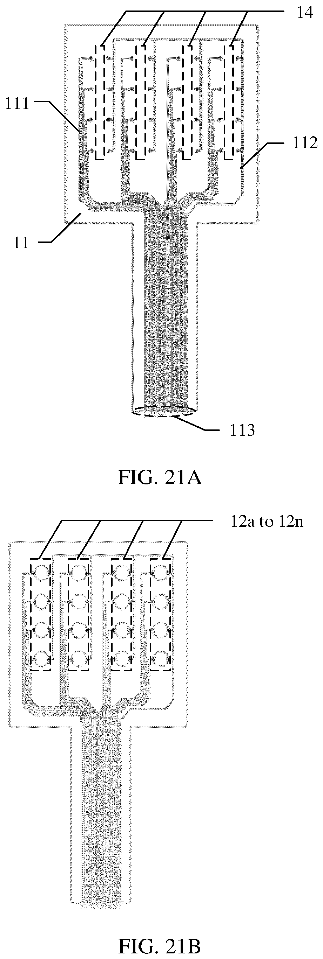

In an embodiment, in a process of making the resonant sensor, for a structure of the sensor base, refer to FIG. 21A. FIG. 21A is a diagram of a structure of a sensor base according to this application. As shown in FIG. 21A, the sensor base includes a second substrate and a third substrate 11. Because the second substrate is located below the third substrate 11, the second substrate is not displayed in FIG. 21A. The third substrate 11 includes a first conductor part 111 and a second conductor part 112, a first hollow part 14 is disposed between the first conductor part 111 and the second conductor part 112, and sensitive element electrodes in the first conductor part 111 and the second conductor part 112 are square electrodes. The third substrate 11 further includes a lead electrode 113 of the first conductor part 111 and the second conductor part 112, and the lead electrode 113 is configured to: electrically connect the first conductor part 111 to a positive electrode of a to-be-detected object, and electrically connect the second conductor part 112 to a negative electrode of the to-be-detected object, so that the to-be-detected object supplies power to the resonant sensor.

For a structure of the sensor base having one or more sensitive elements, refer to FIG. 21B. FIG. 21B is a diagram of a structure of a sensor base having one or more sensitive elements according to this application. As shown in FIG. 21B, the sensor base having one or more sensitive elements includes the sensor base shown in FIG. 21A and a sensitive element 12a to a sensitive element 12n, the sensitive element 12a to the sensitive element 12n are located above the first hollow part 14, and shapes of the sensitive element 12a to the sensitive element 12n are circles.

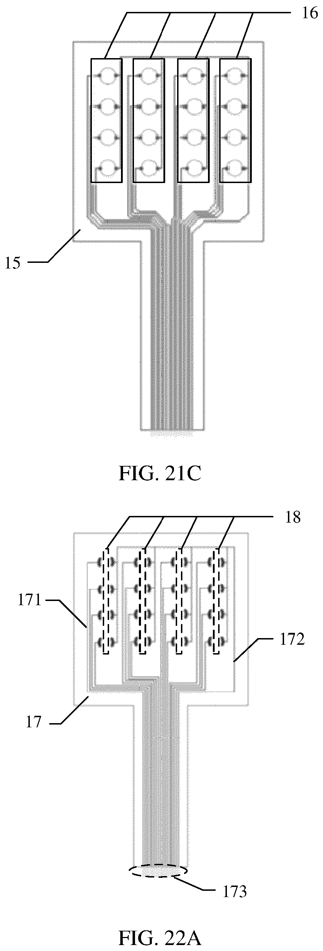

For a structure of the resonant sensor, refer to FIG. 21C. FIG. 21C is a diagram of a structure of a resonant sensor according to this application. As shown in FIG. 21C, the resonant sensor includes the sensor base having the sensitive element 12a to the sensitive element 12n shown in FIG. 21B, a first substrate 15, and a cavity 16, and the cavity 16 includes a first cavity above the sensitive element 12a to the sensitive element 12n and a second cavity below the sensitive element 12a to the sensitive element 12n.

In an embodiment, in a process of making the resonant sensor, for a structure of the sensor base, refer to FIG. 22A. FIG. 22A is a diagram of another structure of a sensor base according to this application. As shown in FIG. 22A, the sensor base includes a second substrate and a third substrate 17. Because the second substrate is located below the third substrate 17, the second substrate is not displayed in FIG. 22A. The third substrate 17 includes a first conductor part 171 and a second conductor part 172, a first hollow part 18 is disposed between the first conductor part 171 and the second conductor part 172, and sensitive element electrodes in the first conductor part 171 and the second conductor part 172 are square electrodes. The third substrate 17 further includes a lead electrode 173 of the first conductor part 171 and the second conductor part 172, and the lead electrode 173 is configured to: electrically connect the first conductor part 171 to a positive electrode of a to-be-detected object, and electrically connect the second conductor part 172 to a negative electrode of the to-be-detected object, so that the to-be-detected object supplies power to the resonant sensor.

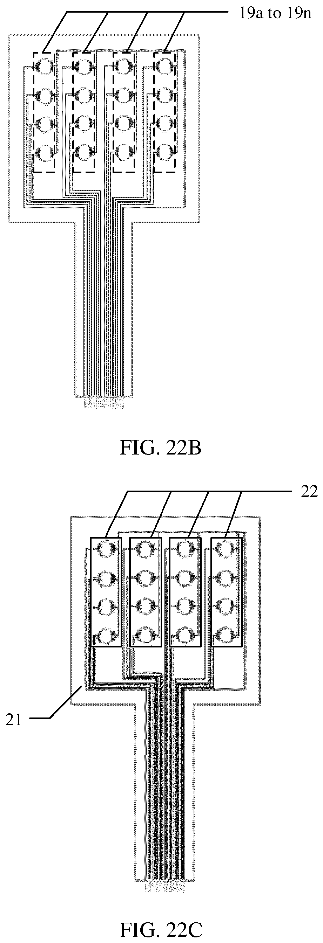

For a structure of the sensor base having one or more sensitive elements, refer to FIG. 22B. FIG. 22B is a diagram of another structure of a sensor base having one or more sensitive elements according to this application. As shown in FIG. 22B, the sensor base having one or more sensitive elements includes the sensor base shown in FIG. 22A and a sensitive element 19a to a sensitive element 19n, the sensitive element 19a to the sensitive element 19n are located above the first hollow part 18, and shapes of the sensitive element 19a to the sensitive element 19n are circles.

For a structure of the resonant sensor, refer to FIG. 22C. FIG. 22C is a diagram of another structure of a resonant sensor according to this application. As shown in FIG. 22C, the resonant sensor includes the sensor base having the sensitive element 19a to the sensitive element 19n shown in FIG. 22B, a first substrate 21, and a cavity 22, and the cavity 22 includes a first cavity above the sensitive element 19a to the sensitive element 19n and a second cavity below the sensitive element 19a to the sensitive element 19n.

In an embodiment, a specific process of preparing a resonant sensor includes the following step 1 to step 6. For ease of description, the following uses an example in which the high-molecular polymer is a polymer film for description. Details are not described below again.

Step 1: A sensor manufacturing device may cut a polymer film into a first substrate based on a size of a first substrate, cut the polymer film into a second substrate based on a size of a second substrate, and cut the polymer film into a third substrate based on a size of the third substrate; perform optical-imaging pattern transfer and etching on the third substrate based on a pattern of the first conductor part and a pattern of the second conductor part, to make a first conductor part and a second conductor part on the third substrate; hollow a part of the third substrate between the first conductor part and the second conductor part based on a shape of a first hollow part, to make the first hollow part between the first conductor part and the second conductor part; and hot press the second substrate and the third substrate to obtain a sensor base, and the third substrate includes the first conductor part and the second conductor part.

Step 2: The sensor manufacturing device successively performs cutting, thickness grinding, shaping, chamfering, etching or cleaning, electrode deposition, and frequency tuning on a crystal based on a crystal direction, a size, a shape, and a processing process of a sensitive element, to make one or more sensitive elements. The crystal is an X-axis, Y-axis, or Z-axis crystal whose surface is ground and purified. A Ti layer whose thickness is 35 nm ± 5 nm and a first electrode whose thickness is 200 nm ± 10 nm are successively prepared on an upper surface of each sensitive element in the one or more sensitive elements by using a radio frequency magnetron sputtering method, and the thickness of the first electrode is increased to a target thickness by using an electroplating method. A second electrode whose thickness is the target thickness is prepared on a lower surface of each sensitive element by using the radio frequency magnetron sputtering method. For details, refer to descriptions of preparing the first electrode. The Ti layer is configured to increase adhesion of the first electrode and the second electrode.

Step 3: The sensor manufacturing device coats the first conductor part and the second conductor part with conductive adhesive, so that a first electrode of each sensitive element in the one or more sensitive elements is electrically connected to the first conductor part through the conductive adhesive, and a second electrode of each sensitive element is electrically connected to the second conductor part through the conductive adhesive. In this case, the one or more sensitive elements may be arranged on the third substrate to form a sensitive element array, thereby obtaining a sensor base having the sensitive element array. The sensor base having the sensitive element array includes a second substrate, a third substrate, and the sensitive element array.

Step 4: The sensor manufacturing device cuts the polymer film into M support sub-parts based on sizes, shapes, and processing processes of the support sub-parts. Each sensitive element in the one or more sensitive elements corresponds to at least two support sub-parts. In at least one of a nitrogen environment and an air environment, the at least two support sub-parts corresponding to each sensitive element are bonded, through a high temperature binder, to end parts of an outer surface that is of the corresponding sensitive element and that is away from the third substrate, to make a sensor body.

Step 5: The sensor manufacturing device makes M support sub-parts from high-temperature wear-resistant resin based on sizes, shapes, and processing processes of the support sub-parts. Each sensitive element in the one or more sensitive elements corresponds to at least two support sub-parts, and the processing process is a 3D printing technology. The at least two support sub-parts corresponding to each sensitive element are bonded, through a high temperature binder, to the third substrate to make a sensor body. The at least two support sub-parts are disposed outside the corresponding sensitive element, and wedge-shaped surfaces of the at least two support sub-parts are clamped to end parts of the corresponding sensitive element. A structure of the support sub-part is shown in FIG. 16. It may be understood that step 5 is not performed when step 4 is performed, and step 4 is not performed when step 5 is performed.

Step 6: The sensor manufacturing device may perform hot-press packaging on the first substrate and the sensor body to make the resonant sensor.

In an embodiment, in step 1, the polymer film is polyimide. Thicknesses of polymer films used to prepare the first substrate, the second substrate, and the third substrate are successively 25 µm, 25 µm, and 60 µm. The size of the first substrate, the size of the second substrate, and the size of the third substrate are 75 mm x 75 mm. A made material of the first conductor part and the second conductor part is Cu and a thickness is 12.5 µm. Process parameters of hot pressing include: a temperature of 165°C, a pressure of 150 MPa, and a time period of 45 minutes. In step 2, the crystal is a quartz crystal, a crystal cut type of the sensitive element is SC cut, a diameter is 5.5 mm, a resonance frequency is 23.7 MHz, a type is a temperature sensitive element, and a shape is a circle, an electrode material of the first electrode and the second electrode is Au, and a target thickness is 3 µm ± 0.2 µm. In step 3, an array level of the sensitive element array is 4 x 4, a row spacing u and a column spacing v of the sensitive element are 10 mm, and a distance w between an edge position of the sensitive element array and an edge position of the third substrate is 6.5 mm. In step 4, a thickness of the support sub-part is 25 µm, an area is 1.5 mm x 1.5 mm, and the polymer film used to make the support sub-part is a polyimide film. In step 6, process parameters of hot pressing include: a temperature of 125°C, a pressure of 150 MPa, and a time period of 90 minutes.

In an embodiment, in step 1, the polymer film is polyimide. Thicknesses of polymer films used to prepare the first substrate, the second substrate, and the third substrate are successively 25 µm, 25 µm, and 60 µm. The size of the first substrate, the size of the second substrate, and the size of the third substrate are 55 mm x 45 mm. A made material of the first conductor part and the second conductor part is Cu and a thickness is 35 µm. Process parameters of hot pressing include: a temperature of 165°C, a pressure of 150 MPa, and a time period of 45 minutes. In step 2, the crystal is a quartz crystal, a crystal cut type of the sensitive element is SC cut, an area is 2.8 mm x 4 mm, a resonance frequency is 60.5 MHz, a type is a force-sensitive element, a shape is a rectangle, an electrode material of the first electrode and the second electrode is Ag, and a target thickness is 8 µm ± 0.2 µm. In step 3, an array level of the sensitive element array is 3 x 3, a row spacing u and a column spacing v of the sensitive element are 9 mm, and a distance w between an edge position of the sensitive element array and an edge position of the third substrate is 3 mm. In step 4, a thickness of the support sub-part is 25 µm, an area is 2.8 mm x 1.5 mm, and the polymer film used to make the support sub-part is polyimide. In step 6, process parameters of hot pressing include: a temperature of 125°C, a pressure of 150 MPa, and a time period of 90 minutes.

In an embodiment, in step 1, the polymer film is polypropylene. Thicknesses of polymer films used to prepare the first substrate, the second substrate, and the third substrate are successively 75 µm, 30 µm, and 75 µm. The size of the first substrate, the size of the second substrate, and the size of the third substrate are 70 mm x 95 mm. A made material of the first conductor part and the second conductor part is Cu and a thickness is 35 µm. Process parameters of hot pressing include: a temperature of 165°C, a pressure of 150 MPa, and a time period of 45 minutes. In step 2, the crystal is a quartz crystal, a crystal cut type of the sensitive element is Y cut, a diameter is 6 mm, a resonance frequency is 12.9 MHz, a type is a temperature sensitive element, and a shape is a circle, an electrode material of the first electrode and the second electrode is Au, and a target thickness is 8 µm ± 0.2 µm. In step 3, an array level of the sensitive element array is 4 x 4, a row spacing u of the sensitive element is 12 mm and a column spacing v is 16 mm, and a distance w between an edge position of the sensitive element array and an edge position of the third substrate is 3.5 mm. In step 4, a thickness of the support sub-part is 30 µm, an area is 1 mm x 1.5 mm, and the polymer film used to make the support sub-part is polypropylene. In step 6, process parameters of hot pressing include: a temperature of 165°C, a pressure of 200 MPa, and a time period of 90 minutes.

In an embodiment, in step 1, the polymer film is polyethylene. Thicknesses of polymer films used to prepare the first substrate, the second substrate, and the third substrate are successively 25 µm, 25 µm, and 60 µm. The size of the first substrate, the size of the second substrate, and the size of the third substrate are 120 mm x 160 mm. A made material of the first conductor part and the second conductor part is Cu and a thickness is 12.7 µm. Process parameters of hot pressing include: a temperature of 135°C, a pressure of 150 MPa, and a time period of 45 minutes. In step 2, the crystal is a quartz crystal, a crystal cut type of the sensitive element is Y cut, a diameter is 6 mm, a resonance frequency is 12.9 MHz, a type is a temperature sensitive element, and a shape is a circle, an electrode material of the first electrode and the second electrode is Pt, and a target thickness is 8 µm ± 0.2 µm. In step 3, an array level of the sensitive element array is 4 x 4, a row spacing u and a column spacing v of the sensitive element are 30.2 mm, and a distance w between an edge position of the sensitive element array and an edge position of the third substrate is 7.5 mm. In step 4, a thickness of the support sub-part is 25 µm, an area is 1.5 mm x 1.5 mm, and the polymer film used to make the support sub-part is polyethylene. In step 6, process parameters of hot pressing include: a temperature of 135°C, a pressure of 190 MPa, and a time period of 90 minutes.

In an embodiment, in step 1, the polymer film is polyethylene. Thicknesses of polymer films used to prepare the first substrate, the second substrate, and the third substrate are successively 25 µm, 25 µm, and 60 µm. The size of the first substrate, the size of the second substrate, and the size of the third substrate are 120 mm x 160 mm. A made material of the first conductor part and the second conductor part is Cu and a thickness is 12.7 µm. Process parameters of hot pressing include: a temperature of 135°C, a pressure of 150 MPa, and a time period of 45 minutes. In step 2, the crystal is a quartz crystal, a crystal cut type of the sensitive element is Y cut, a diameter is 6 mm, a resonance frequency is 12.9 MHz, a type is a temperature sensitive element, and a shape is a circle, an electrode material of the first electrode and the second electrode is Pt, and a target thickness is 8 µm ± 0.2 µm. In step 3, an array level of the sensitive element array is 4 x 4, a row spacing u and a column spacing v of the sensitive element are 30.2 mm, and a distance w between an edge position of the sensitive element array and an edge position of the third substrate is 7.5 mm. In step 5, a length of the support sub-part is 6 mm, a cross section is a right-angle trapezoid, an upper bottom of the cross section is 1 mm, a lower bottom is 2.5 mm, and a height is 200 µm. In step 6, process parameters of hot pressing include: a temperature of 135°C, a pressure of 190 MPa, and a time period of 90 minutes.

In an embodiment, in step 1, the polymer film is polyethylene. Thicknesses of polymer films used to prepare the first substrate, the second substrate, and the third substrate are successively 25 µm, 25 µm, and 60 µm. The size of the first substrate, the size of the second substrate, and the size of the third substrate are 120 mm x 160 mm. A made material of the first conductor part and the second conductor part is Cu and a thickness is 12.7 µm. Process parameters of hot pressing include: a temperature of 135°C, a pressure of 150 MPa, and a time period of 45 minutes. In step 2, the crystal is a quartz crystal, a crystal cut type of the sensitive element is SC cut, an area is 2.8 mm x 4 mm, a resonance frequency is 60.5 MHz, a type is a force-sensitive element, a shape is a rectangle, an electrode material of the first electrode and the second electrode is Pt, and a target thickness is 8 µm ± 0.2 µm. In step 3, an array level of the sensitive element array is 4 x 4, a row spacing u and a column spacing v of the sensitive element are 30.2 mm, and a distance w between an edge position of the sensitive element array and an edge position of the third substrate is 7.5 mm. In step 5, a length of the support sub-part is 6 mm, a cross section is a right-angle trapezoid, an upper bottom of the cross section is 1 mm, a lower bottom is 2.5 mm, and a height is 200 µm. In step 6, process parameters of hot pressing include: a temperature of 135°C, a pressure of 190 MPa, and a time period of 90 minutes.

In an embodiment, in step 1, the polymer film is polyimide. Thicknesses of polymer films used to prepare the first substrate, the second substrate, and the third substrate are successively 25 µm, 25 µm, and 60 µm. The size of the first substrate, the size of the second substrate, and the size of the third substrate are 55 mm x 45 mm. A made material of the first conductor part and the second conductor part is Cu and a thickness is 35 µm. Process parameters of hot pressing include: a temperature of 165°C, a pressure of 150 MPa, and a time period of 45 minutes. In step 2, the crystal is a CTGS crystal, a crystal cut type of the sensitive element is SC cut, an area is 2.8 mm x 4 mm, a resonance frequency is 60.5 MHz, a type is a force-sensitive element, a shape is a rectangle, an electrode material of the first electrode and the second electrode is Au, and a target thickness is 5 µm ± 0.2 µm. In step 3, an array level of the sensitive element array is 3 x 3, a row spacing u and a column spacing v of the sensitive element are 9 mm, and a distance w between an edge position of the sensitive element array and an edge position of the third substrate is 3 mm. In step 4, a thickness of the support sub-part is 25 µm, an area is 2.8 mm x 1.5 mm, and the polymer film used to make the support sub-part is polyimide. In step 6, process parameters of hot pressing include: a temperature of 125°C, a pressure of 150 MPa, and a time period of 90 minutes.

In an embodiment, in step 1, the polymer film is polyimide. Thicknesses of polymer films used to prepare the first substrate, the second substrate, and the third substrate are successively 25 µm, 25 µm, and 60 µm. The size of the first substrate, the size of the second substrate, and the size of the third substrate are 55 mm x 45 mm. A made material of the first conductor part and the second conductor part is Cu and a thickness is 35 µm. Process parameters of hot pressing include: a temperature of 165°C, a pressure of 150 MPa, and a time period of 45 minutes. In step 2, the crystal is an LGS crystal, a crystal cut type of the sensitive element is SC cut, an area is 2.8 mm x 4 mm, a resonance frequency is 33 MHz, a type is a force-sensitive element, a shape is a rectangle, an electrode material of the first electrode and the second electrode is Au, and a target thickness is 6 µm ± 0.2 µm. In step 3, an array level of the sensitive element array is 3 x 3, a row spacing u and a column spacing v of the sensitive element are 9 mm, and a distance w between an edge position of the sensitive element array and an edge position of the third substrate is 3 mm. In step 4, a thickness of the support sub-part is 25 µm, an area is 2.8 mm x 1.5 mm, and the polymer film used to make the support sub-part is polyimide. In step 6, process parameters of hot pressing include: a temperature of 125°C, a pressure of 150 MPa, and a time period of 90 minutes.

It should be noted that a specific structure of the resonant sensor made by the sensor manufacturing device according to the foregoing step S101 to step S103 is shown in FIG. 1 to FIG. 14. Details are not described herein again.

In the method, the sensor manufacturing device may make a resonant sensor with flexible packaging, to operate in an environment with a flexible feature requirement, thereby expanding an application field and an application scenario of the resonant sensor, improving detection performance of the resonant sensor, and having high applicability.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A resonant sensor (1), comprising a sensor body (10) and a first substrate (20), wherein the first substrate (20) is disposed on an outer side of the sensor body (10) and is configured to protect the sensor body (10), the sensor body (10) comprises a second substrate (100), a third substrate (101), one or more sensitive elements (102a to 102n), and a support component (103), and the first substrate (20), the second substrate (100), and the third substrate (101) are all flexible substrates; and
the second substrate (100) and the third substrate (101) are stacked, the third substrate (101) comprises a first conductor part (1011) and a second conductor part (1012), both the first conductor part (1011) and the second conductor part (1012) are located on a side that is of the third substrate (101) and that is away from the second substrate (100), and a first hollow part (104) is disposed between the first conductor part (1011) and the second conductor part (1012), wherein the first hollow part (104) is configured to isolate the first conductor part (1011) from the second conductor part (1012); the one or more sensitive elements (102a to 102n) are disposed on an outer side that is of the first conductor part (1011) and the second conductor part (1012) and that is away from the second substrate (100), and each sensitive element (102a to 102n) is electrically connected to the first conductor part (1011) and the second conductor part (1012); and the support component (103) is disposed on an outer side that is of the third substrate (101) and that is away from the second substrate (100) and is configured to support the first substrate (20), so that the first substrate (20) is isolated from the one or more sensitive elements (102a to 102n),
wherein the first substrate (20) comprises a protection part (200) and two connection parts (201, 202), two end parts of the protection part (200) are securely in contact with the second substrate (100) to form protection space, the third substrate (101), the one or more sensitive elements (102a to 102n), and the support component (103) are disposed in the protection space, and each connection part (201, 202) in the two connection parts (201, 202) is configured to be fastened to an end part of the protection part (200) and an end part of the second substrate (100).

2. The resonant sensor (1) according to claim 1, wherein the flexible substrate comprises a high-molecular polymer.

3. The resonant sensor (1) according to claim 1 or 2, wherein the support component (103) comprises M support sub-parts; and
each sensitive element in the one or more sensitive elements (102a to 102n) corresponds to at least two support sub-parts, one end that is of each sensitive element and that is electrically connected to the first conductor part (1011) has at least one support sub-part, and the other end that is of the sensitive element and that is electrically connected to the second conductor part (1012) also has at least one support sub-part.

4. The resonant sensor (1) according to claim 3, wherein the at least two support sub-parts corresponding to each sensitive element (102a to 102n) are configured to be bonded to the corresponding sensitive element.

5. The resonant sensor (1) according to claim 4, wherein the at least two support sub-parts corresponding to each sensitive element (102a to 102n) are configured to be bonded to an outer surface that is of the corresponding sensitive element and that is away from the third substrate (101).

6. The resonant sensor (1) according to claim 4 or 5, wherein the at least two support sub-parts corresponding to each sensitive element (102a to 102n) are configured to be bonded to end parts of the outer surface that is of the corresponding sensitive element and that is away from the third substrate (101).

7. The resonant sensor (1) according to claim 3, wherein a thickness of the at least two support sub-parts corresponding to each sensitive element (102a to 102n) is greater than a thickness of the corresponding sensitive element, and the at least two support sub-parts are disposed outside the corresponding sensitive element and are bonded to the third substrate (101).

8. The resonant sensor (1) according to claim 7, wherein the at least two support sub-parts corresponding to each sensitive element (102a to 102n) are disposed outside the corresponding sensitive element, and are spaced with the corresponding sensitive element.

9. The resonant sensor (1) according to claim 7, wherein the at least two support sub-parts corresponding to each sensitive element (102a to 102n) are all wedge-shaped support parts, the at least two support sub-parts are disposed outside the corresponding sensitive element, and wedge-shaped surfaces of the at least two support sub-parts are clamped to end parts of the corresponding sensitive element.

10. The resonant sensor (1) according to any one of claims 3 to 9, wherein each sensitive element (102a to 102n) in at least one sensitive element in the one or more sensitive elements (102a to 102n) corresponds to two support sub-parts, and the two support sub-parts are symmetrically disposed.

11. The resonant sensor (1) according to claim 1 or 2, wherein the support component (103) comprises at least one second hollow part, each second hollow part in the at least one second hollow part penetrates the support component (103) along a thickness direction of the support component (103), a thickness of the support component (103) is greater than a thickness of each sensitive element (102a to 102n) in the one or more sensitive elements (102a to 102n), and the support component (103) is configured to be bonded to the third substrate (101); and
each sensitive element (102a to 102n) is correspondingly disposed in an area enclosed by one second hollow part.

12. A battery (2), wherein the battery (2) comprises a positive electrode (21), a negative electrode (22), and the resonant sensor (1) according to any one of claims 1 to 11, the positive electrode (21) is electrically connected to the first conductor part (1011) in the resonant sensor (1), and the negative electrode (22) is electrically connected to the second conductor part (1012) in the resonant sensor (1).

13. A battery pack (3), wherein the battery pack (3) comprises a plurality of batteries, the plurality of batteries are connected in series or in parallel, and each of the plurality of batteries comprises the resonant sensor (1) according to any one of claims 1 to 11.

14. An energy storage system (4), wherein the energy storage system (4) comprises a battery pack and a direct current-direct current converter, the battery pack comprises a plurality of batteries, and each of the plurality of batteries comprises the resonant sensor (1) according to any one of claims 1 to 11.

## Patentansprüche

1. Resonanzsensor (1), umfassend einen Sensorkörper (10) und ein erstes Substrat (20), wobei das erste Substrat (20) an einer Außenseite des Sensorkörpers (10) angeordnet ist und dazu konfiguriert ist, den Sensorkörper (10) zu schützen, der Sensorkörper (10) ein zweites Substrat (100), ein drittes Substrat (101), ein oder mehrere empfindliche Elemente (102a bis 102n) und eine Stützkomponente (103) umfasst und das erste Substrat (20), das zweite Substrat (100) und das dritte Substrat (101) alle flexible Substrate sind; und
das zweite Substrat (100) und das dritte Substrat (101) gestapelt sind, das dritte Substrat (101) ein erstes Leiterteil (1011) und ein zweites Leiterteil (1012) umfasst, sich sowohl das erste Leiterteil (1011) als auch das zweite Leiterteil (1012) auf einer Seite befinden, die zu dem dritten Substrat (101) gehört und die von dem zweiten Substrat (100) abgewandt ist, und ein erstes Hohlraumteil (104) zwischen dem ersten Leiterteil (1011) und dem zweiten Leiterteil (1012) angeordnet ist, wobei das erste Hohlraumteil (104) dazu konfiguriert ist, das erste Leiterteil (1011) von dem zweiten Leiterteil (1012) zu isolieren; das eine oder die mehreren empfindlichen Elemente (102a bis 102n) an einer Außenseite angeordnet sind, die zu dem ersten Leiterteil (1011) und dem zweiten Leiterteil (1012) gehört und die von dem zweiten Substrat (100) abgewandt ist, und jedes empfindliche Element (102a bis 102n) elektrisch mit dem ersten Leiterteil (1011) und dem zweiten Leiterteil (1012) verbunden ist; und die Stützkomponente (103) an einer Außenseite angeordnet ist, die zu dem dritten Substrat (101) gehört und die von dem zweiten Substrat (100) abgewandt ist, und dazu konfiguriert ist, das erste Substrat (20) zu stützen, so dass das erste Substrat (20) von dem einen oder den mehreren empfindlichen Elementen (102a bis 102n) isoliert ist,
wobei das erste Substrat (20) ein Schutzteil (200) und zwei Verbindungsteile (201, 202) umfasst, zwei Endteile des Schutzteils (200) sicher in Kontakt mit dem zweiten Substrat (100) sind, um einen Schutzraum zu bilden, das dritte Substrat (101), das eine oder die mehreren empfindlichen Elemente (102a bis 102n) und die Stützkomponente (103) in dem Schutzraum angeordnet sind und jedes Verbindungsteil (201, 202) der zwei Verbindungsteile (201, 202) dazu konfiguriert ist, an einem Endteil des Schutzteils (200) und einem Endteil des zweiten Substrats (100) befestigt zu werden.

2. Resonanzsensor (1) nach Anspruch 1, wobei das flexible Substrat ein hochmolekulares Polymer umfasst.

3. Resonanzsensor (1) nach Anspruch 1 oder 2, wobei die Stützkomponente (103) M Stützunterteile umfasst; und
jedes empfindliche Element des einen oder der mehreren empfindlichen Elemente (102a bis 102n) mindestens zwei Stützunterteilen entspricht, ein Ende, das zu jedem empfindlichen Element gehört und das elektrisch mit dem ersten Leiterteil (1011) verbunden ist, mindestens ein Stützunterteil aufweist und das andere Ende, das zu dem empfindlichen Element gehört und das elektrisch mit dem zweiten Leiterteil (1012) verbunden ist, ebenfalls mindestens ein Stützunterteil aufweist.

4. Resonanzsensor (1) nach Anspruch 3, wobei die mindestens zwei Stützunterteile, die jedem empfindlichen Element (102a bis 102n) entsprechen, dazu konfiguriert sind, mit dem entsprechenden empfindlichen Element verklebt zu werden.

5. Resonanzsensor (1) nach Anspruch 4, wobei die mindestens zwei Stützunterteile, die jedem empfindlichen Element (102a bis 102n) entsprechen, dazu konfiguriert sind, mit einer Außenfläche verklebt zu werden, die zu dem entsprechenden empfindlichen Element gehört und die von dem dritten Substrat (101) abgewandt ist.

6. Resonanzsensor (1) nach Anspruch 4 oder 5, wobei die mindestens zwei Stützunterteile, die jedem empfindlichen Element (102a bis 102n) entsprechen, dazu konfiguriert sind, mit Endteilen der Außenfläche verklebt zu werden, die zu dem entsprechenden empfindlichen Element gehört und die von dem dritten Substrat (101) abgewandt ist.

7. Resonanzsensor (1) nach Anspruch 3, wobei eine Dicke der mindestens zwei Stützunterteile, die jedem empfindlichen Element (102a bis 102n) entsprechen, größer ist als eine Dicke des entsprechenden empfindlichen Elements und die mindestens zwei Stützunterteile außerhalb des entsprechenden empfindlichen Elements angeordnet sind und mit dem dritten Substrat (101) verklebt sind.

8. Resonanzsensor (1) nach Anspruch 7, wobei die mindestens zwei Stützunterteile, die jedem empfindlichen Element (102a bis 102n) entsprechen, außerhalb des entsprechenden empfindlichen Elements angeordnet sind und mit Abstand zu dem entsprechenden empfindlichen Element angeordnet sind.

9. Resonanzsensor (1) nach Anspruch 7, wobei die mindestens zwei Stützunterteile, die jedem empfindlichen Element (102a bis 102n) entsprechen, alle keilförmige Stützteile sind, die mindestens zwei Stützunterteile außerhalb des entsprechenden empfindlichen Elements angeordnet sind und keilförmige Flächen der mindestens zwei Stützunterteile an Endteilen des entsprechenden empfindlichen Elements festgeklemmt sind.

10. Resonanzsensor (1) nach einem der Ansprüche 3 bis 9, wobei jedes empfindliche Element (102a bis 102n) in mindestens einem empfindlichen Element des einen oder der mehreren empfindlichen Elemente (102a bis 102n) zwei Stützunterteilen entspricht und die zwei Stützunterteile symmetrisch angeordnet sind.

11. Resonanzsensor (1) nach Anspruch 1 oder 2, wobei die Stützkomponente (103) mindestens ein zweites Hohlraumteil umfasst, jedes zweite Hohlraumteil des mindestens einen zweiten Hohlraumteils die Stützkomponente (103) entlang einer Dickenrichtung der Stützkomponente (103) durchdringt, eine Dicke der Stützkomponente (103) größer ist als eine Dicke jedes empfindlichen Elements (102a bis 102n) des einen oder der mehreren empfindlichen Elemente (102a bis 102n) und die Stützkomponente (103) dazu konfiguriert ist, mit dem dritten Substrat (101) verklebt zu werden; und
jedes empfindliche Element (102a bis 102n) entsprechend in einem Bereich angeordnet ist, der durch ein zweites Hohlraumteil umschlossen ist.

12. Batterie (2), wobei die Batterie (2) eine positive Elektrode (21), eine negative Elektrode (22) und den Resonanzsensor (1) nach einem der Ansprüche 1 bis 11 umfasst, die positive Elektrode (21) elektrisch mit dem ersten Leiterteil (1011) in dem Resonanzsensor (1) verbunden ist und die negative Elektrode (22) elektrisch mit dem zweiten Leiterteil (1012) in dem Resonanzsensor (1) verbunden ist.

13. Batteriepack (3), wobei das Batteriepack (3) eine Vielzahl von Batterien umfasst, die Vielzahl von Batterien in Reihe oder parallel geschaltet sind und jede der Vielzahl von Batterien den Resonanzsensor (1) nach einem der Ansprüche 1 bis 11 umfasst.

14. Energiespeichersystem (4), wobei das Energiespeichersystem (4) ein Batteriepack und einen Gleichstrom-Gleichstrom-Wandler umfasst, das Batteriepack eine Vielzahl von Batterien umfasst und jede der Vielzahl von Batterien den Resonanzsensor (1) nach einem der Ansprüche 1 bis 11 umfasst.

## Revendications

1. Capteur résonant (1), comprenant un corps de capteur (10) et un premier substrat (20), dans lequel le premier substrat (20) est disposé sur une face extérieure du corps de capteur (10) et est configuré pour protéger le corps de capteur (10), le corps de capteur (10) comprend un deuxième substrat (100), un troisième substrat (101), un ou plusieurs éléments sensibles (102a à 102n) et un composant de support (103), et le premier substrat (20), le deuxième substrat (100) et le troisième substrat (101) sont tous des substrats flexibles ; et
le deuxième substrat (100) et le troisième substrat (101) sont empilés, le troisième substrat (101) comprend une première partie conductrice (1011) et une seconde partie conductrice (1012), la première partie conductrice (1011) et la seconde partie conductrice (1012) sont toutes deux situées sur une face qui est du troisième substrat (101) et qui est éloigné du deuxième substrat (100), et une première partie creuse (104) est disposée entre la première partie conductrice (1011) et la seconde partie conductrice (1012), dans lequel la première partie creuse (104) est configurée pour isoler la première partie conductrice (1011) de la seconde partie conductrice (1012) ; les un ou plusieurs éléments sensibles (102a à 102n) sont disposés sur une face extérieure qui est de la première partie conductrice (1011) et de la seconde partie conductrice (1012) et qui est à l'opposé du deuxième substrat (100), et chaque élément sensible (102a à 102n) est connecté électriquement à la première partie conductrice (1011) et à la seconde partie conductrice (1012), et le composant de support (103) est disposé sur une face extérieure du troisième substrat (101) et qui est à l'opposé du deuxième substrat (100) et est configuré pour supporter le premier substrat (20), de sorte que le premier substrat (20) est isolé des un ou plusieurs éléments sensibles (102a à 102n),
dans lequel le premier substrat (20) comprend une partie de protection (200) et deux parties de connexion (201, 202), deux parties d'extrémité de la partie de protection (200) sont en contact sécurisé avec le deuxième substrat (100) pour former un espace de protection, le troisième substrat (101), les un ou plusieurs éléments sensibles (102a à 102n) et le composant de support (103) sont disposés dans l'espace de protection, et chaque partie de connexion (201, 202) dans les deux parties de connexion (201, 202) est configurée pour être fixée à une partie d'extrémité de la partie de protection (200) et à une partie d'extrémité du deuxième substrat (100).

2. Capteur résonant (1) selon la revendication 1, dans lequel le substrat flexible comprend un polymère à haut poids moléculaire.

3. Capteur résonant (1) selon la revendication 1 ou 2, dans lequel le composant de support (103) comprend M sous-parties de support ; et
chaque élément sensible dans les un ou plusieurs éléments sensibles (102a à 102n) correspond à au moins deux sous-parties de support, une extrémité qui est de chaque élément sensible et qui est électriquement connectée à la première partie conductrice (1011) a au moins une sous-partie de support, et l'autre extrémité qui est de l'élément sensible et qui est électriquement connectée à la seconde partie conductrice (1012) a également au moins une sous-partie de support.

4. Capteur résonant (1) selon la revendication 3, dans lequel les au moins deux sous-parties de support correspondant à chaque élément sensible (102a à 102n) sont configurées pour être liées à l'élément sensible correspondant.

5. Capteur résonant (1) selon la revendication 4, dans lequel les au moins deux sous-parties de support correspondant à chaque élément sensible (102a à 102n) sont configurées pour être liées à une surface extérieure qui est de l'élément sensible correspondant et qui est à l'opposé du troisième substrat (101).

6. Capteur résonant (1) selon la revendication 4 ou 5, dans lequel les au moins deux sous-parties de support correspondant à chaque élément sensible (102a à 102n) sont configurées pour être liées à des parties d'extrémité de la surface extérieure qui est de l'élément sensible correspondant et qui est à l'opposé du troisième substrat (101).

7. Capteur résonant (1) selon la revendication 3, dans lequel une épaisseur des au moins deux sous-parties de support correspondant à chaque élément sensible (102a à 102n) est supérieure à une épaisseur de l'élément sensible correspondant, et les au moins deux sous-parties de support sont disposées à l'extérieur de l'élément sensible correspondant et sont liées au troisième substrat (101).

8. Capteur résonant (1) selon la revendication 7, dans lequel les au moins deux sous-parties de support correspondant à chaque élément sensible (102a à 102n) sont disposées à l'extérieur de l'élément sensible correspondant et sont espacées de l'élément sensible correspondant.

9. Capteur résonant (1) selon la revendication 7, dans lequel les au moins deux sous-parties de support correspondant à chaque élément sensible (102a à 102n) sont toutes des parties de support en forme de coin, les au moins deux sous-parties de support sont disposées à l'extérieur de l'élément sensible correspondant, et les surfaces en forme de coin des au moins deux sous-parties de support sont fixées aux parties d'extrémité de l'élément sensible correspondant.

10. Capteur résonant (1) selon l'une quelconque des revendications 3 à 9, dans lequel chaque élément sensible (102a à 102n) dans au moins un élément sensible dans les un ou plusieurs éléments sensibles (102a à 102n) correspond à deux sous-parties de support, et les deux sous-parties de support sont disposées symétriquement.

11. Capteur résonant (1) selon la revendication 1 ou 2, dans lequel le composant de support (103) comprend au moins une seconde partie creuse, chaque seconde partie creuse dans l'au moins une seconde partie creuse pénètre le composant de support (103) selon une direction d'épaisseur du composant de support (103), une épaisseur du composant de support (103) est supérieure à une épaisseur de chaque élément sensible (102a à 102n) dans les un ou plusieurs éléments sensibles (102a à 102n), et le composant de support (103) est configuré pour être collé au troisième substrat (101) ; et
chaque élément sensible (102a à 102n) est disposé en conséquence dans une zone entourée par une seconde partie creuse.

12. Batterie (2), dans laquelle la batterie (2) comprend une électrode positive (21), une électrode négative (22) et le capteur résonant (1) selon l'une quelconque des revendications 1 à 11, l'électrode positive (21) est connectée électriquement à la première partie conductrice (1011) dans le capteur résonant (1), et l'électrode négative (22) est connectée électriquement à la seconde partie conductrice (1012) dans le capteur résonant (1) .

13. Bloc-batterie (3), dans lequel le bloc-batterie (3) comprend une pluralité de batteries, la pluralité de batteries sont connectées en série ou en parallèle, et chacune des batteries comprend le capteur résonant (1) selon l'une quelconque des revendications 1 à11.

14. Système de stockage d'énergie (4), dans lequel le système de stockage d'énergie (4) comprend un bloc-batterie et un convertisseur courant continu-courant continu, le bloc-batterie comprend une pluralité de batteries, et chacune des batteries comprend le capteur résonant (1) selon l'une quelconque des revendications 1 à 11.
